# EUROPÄISCHE PATENTSCHRIFT

(11) **EP 3 350 515 B1**
(45) Veröffentlichungstag und Bekanntmachung des Hinweises auf die Patenterteilung: **21.04.2021**
(21) Anmeldenummer: 16775505.7
(22) Anmeldetag: 16.09.2016
(51) Int. Cl.: F24D 19/10

(54) **VERFAHREN UND VORRICHTUNG ZUM REGELN EINER TEMPERATUR EINES FLUIDEN TRÄGERMEDIUMS**
METHOD AND DEVICE FOR REGULATING A TEMPERATURE OF A FLUID CARRIER MEDIUM
PROCÉDÉ ET DISPOSITIF DE RÉGULATION DE LA TEMPÉRATURE D'UN MILIEU PORTEUR FLUIDE

(30) Priorität: 18.09.2015 DE 102015218012
(43) Veröffentlichungstag der Anmeldung: 25.07.2018
(73) Patentinhaber: Viessmann Climate Solutions SE, 35108 Allendorf (Eder) (DE)
(72) Erfinder: ARNOLD, Christian, 36119 Neuhof-Rommerz (DE); OSTERLOH, Reinhard, 59955 Winterberg (DE); ROSENTAL, Alexander, 35039 Marburg (DE)
(74) Vertreter: MERH-IP Matias Erny Reichl Hoffmann Patentanwälte PartG mbB
(86) Internationale Anmeldenummer: PCT/EP2016/072046
(87) Internationale Veröffentlichungsnummer: WO 2017/046374

(56) Entgegenhaltungen:
- EP-A2- 0 308 848
- EP-A2- 1 403 588
- DE-A1- 4 312 808

## Beschreibung

Die vorliegende Erfindung betrifft ein Verfahren, eine Vorrichtung und ein System zum Regeln einer Temperatur eines fluiden Trägermediums, das einen Energieerzeuger durchströmt. Temperaturregelungen finden in den verschiedensten Bereichen Anwendung. Während es in manchen Fällen lediglich darauf ankommt, die Temperatur eines Trägermediums über oder unter einem vorbestimmten Schwellenwert zu halten, ist es bei einer Vielzahl von Anwendungen erforderlich, die Temperatur des Trägermediums auf einem vordefinierten Sollwert zu stabilisieren, wobei der Sollwert zum Beispiel durch einen Benutzer oder eine interne oder externe Steuerelektronik berechnet oder vorgegeben werden kann.

Zum Stabilisieren einer Temperatur (zum Beispiel der Betriebstemperatur) eines Mediums (Trägermedium) auf einem vorbestimmten Sollwert (*W*) wird im Allgemeinen ein Temperatur-Regelkreis verwendet. In einem solchen Temperatur-Regelkreis misst ein geeigneter Sensor (z.B. ein Temperaturfühler) den Istwert (*X*) der Temperatur des Trägermediums. Dieser Istwert (*X*) wird mit dem Sollwert (*W*) verglichen und die Abweichung des Istwerts (*X*) vom Sollwert (*W*) wird bestimmt. Diese Abweichung wird als Regeldifferenz oder Regelabweichung (*e = W - X*) bezeichnet. Dieser Regelabweichung muss der Temperaturregler entgegenwirken, indem über geeignete Mittel der Istwert erhöht oder reduziert wird. Die Größe(n), die zum diesem Zweck geändert werden muss (müssen), wird (werden) als Stellgröße(n) bezeichnet. Die Stellgröße wird an ein Stellglied (Aktor) ausgegeben, um eine Ausgangsgröße des Systems zu steuern. In einem Heizungssystem ist beispielsweise die Heizleistung des Heizkessels eine Ausgangsgröße, die über ein Stellglied durch eine Stellgröße gesteuert wird, um die Temperatur eines Trägermediums als Regelgröße zu regeln.

Die Regelabweichung (e) muss also in eine Änderung der Stellgröße(n) umgerechnet werden. Eine Änderung der Stellgröße(n) bewirkt wiederum eine Änderung der Regelgröße (X). Wird zum Beispiel die Heizleistung des Kessels erhöht, so erhöht sich die Temperatur des Trägermediums. Die durch den Regelkreis bewirkte Änderung der Stellgröße soll die Regelabweichung verringern beziehungsweise ganz beseitigen. Stellgrößen werden im Allgemeinen an Stelleinrichtungen (auch als Aktoren oder Stellglieder bezeichnet) ausgegeben, welche das zu regelnde System in entsprechender Weise beeinflussen können, und die über den Regelkreis gesteuert werden können.

Ein bekanntes Temperaturregelverfahren wird beispielsweise in Heizungsanlagen angewendet, bei denen ein leistungsregulierbarer Energieerzeuger, beispielsweise ein Brenner, der der Heizöl, Gas oder Holz verbrennt, ein Trägermedium aufheizt. Eine solche Heizungsanlage wird zum Beispiel in der DE 102014100057 A1 offenbart.

Aus der EP 1403588 A2 ist eine gattungsgemäße Heizungsanlage für ein Gebäude bekannt. Eine derartige Heizungsanlage umfasst üblicherweise eine Heizeinrichtung mit einem Brenner und mit einem vom Brenner beheizten Heizblock zur Wärmeabgabe an eine Heizflüssigkeit eines im Gebäude verlaufenden Heizkreises. Der Heizkreis umfasst Leitungen sowie in Räumen des Gebäudes angeordnete Heizkörper und/oder Wand- und/oder Fußbodenheizungen. Die Heizungsanlage umfasst außerdem eine Pumpe zum Antrieb der Heizflüssigkeit im Heizkreis sowie eine Steuer- und/oder Regeleinrichtung, mit deren Hilfe die Pumpe und/oder der Brenner in Abhängigkeit vorbestimmter Parameter betätigt werden.

Ein Verfahren zum Betreiben einer Heizungsanlage, bei dem die Heizleistung eines Brenners reguliert wird, ist beispielsweise aus der DE 102012101268 A1 bekannt. Ein Brenner erwärmt ein Trägermedium über einen Wärmetauscher. Über einen Volumenstromsensor wird ein hydraulischer Abgleich des Rohrnetzes durchgeführt. Zum Absichern des Wärmetauschers gegen Überhitzung wird die Menge des Trägermediums, das den Wärmetauscher durchströmt, überwacht. Bei Gefahr von Überhitzung wird die Leistung des Brenners reduziert.

Aus der Offenlegungsschrift DE 102014112578 A1 ist ein Verfahren zum Bertreiben einer Heizungsanlage bekannt, bei dem eine leistungsregulierbare Pumpe zum Fördern des Trägermediums verwendet wird, wobei die Leistung der Pumpe in Abhängigkeit einer Vorlauftemperatur des Trägermediums geregelt wird. Der Volumenstrom des Trägermediums durch den Wärmeerzeuger kann gemäß verschiedener Betriebsmodi erhöht oder verringert werden, wobei ein Mindestwert des Volumenstroms nicht unterschritten wird. Diese Funktion dient zum Schutz des Wärmeerzeugers, so dass bei einer hohen Vorlauftemperatur ein hoher Volumenstrom eingestellt wird. Allerdings wird auch hier der Volumenstrom nicht zum Regeln der Vorlauftemperatur auf einen Sollwert verwendet.

Die im Folgenden beschriebenen Verfahren sollen die Temperatur eines fluiden Trägermediums, das einen Energieerzeuger durchströmt und von diesem erhitzt oder abgekühlt wird, regeln. Bei dem Energieerzeuger kann es sich beispielsweise um einen mit einem flüssigen Trägermedium durchströmten Wärmeerzeuger (wie etwa einen ÖI-, Gas- oder Feststoffkessel, ein Blockheizkraftwerk oder eine Wärmepumpe) bzw. Kältemaschine oder auch eine Klimaanlage handeln. Zur Regelung erfasst dabei eine Regelungseinrichtung, beispielsweise ein eingebettetes System, den Istwert der zu regelnden Temperatur des Trägermediums mit einer geeigneten Sensorik an wenigstens einem geeigneten Punkt im System (zum Beispiel im Vorlauf) und vergleicht diese mit einem zugehörigen Sollwert, welcher entweder von der gleichen oder einer anderen Regelungseinrichtung oder von einem separaten Sollwertgenerator (z. B. parametrierter konstanter Sollwert) oder manuell von einem Benutzer vorgegeben werden kann. Die Regelungseinrichtung berechnet über ein geeignetes Regelungsverfahren Stellgrade für geeignete Aktoren, um die Regelabweichung zwischen Sollwert und Istwert zu minimieren.

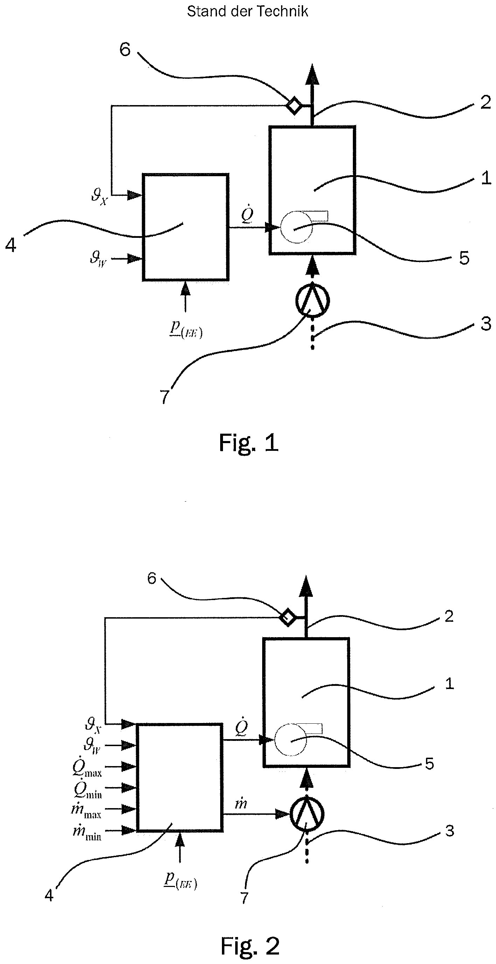

Gemäß dem Stand der Technik wird für das Regeln einer Temperatur eines Trägermediums, das durch einen Energieerzeuger strömt, üblicherweise nur die Leistung des Energieerzeugers (als Wärme- bzw. Kältequelle) als Ausgangsgröße für das Regelungsverfahren verwendet. Figur 1 zeigt eine schematische Darstellung eines Regelverfahrens gemäß dem Stand der Technik. Ein Wärmeerzeuger 1 mit einem Brenner, dessen Brennleistung über einen geeigneten Aktor 5 gesteuert wird, erwärmt ein Wärmeträgermedium, welches durch eine Vorlaufleitung 2 in einen Kreislauf strömt. Ein Sensor 6 im Vorlauf 2 misst den Istwert *ϑ_{X}* der Temperatur (hier: Vorlauftemperatur) des Trägermediums. Über einen Rücklauf 3 strömt das (abgekühlte) Trägermedium zurück in den Wärmeerzeuger 1. Eine Pumpe 7 sorgt für einen Volumen-, bzw. Massenstrom des Trägermediums durch den Kreislauf, wobei Volumen- und Massenstrom bei einem flüssigen Trägermedium im Wesentlichen proportional zueinander sind.

Die Regelvorrichtung 4 vergleicht den gemessenen Istwert *ϑ_{X}* der Vorlauftemperatur des Trägermediums mit einem vorgegebenen Sollwert *ϑ_{W}* und berechnet die Regelabweichung (Differenz) zwischen Sollwert *ϑ_{W}* und Istwert *ϑ_{X}*. In Abhängigkeit der Regelabweichung wird die Brennerleistung *Q* verstellt, indem die Regelvorrichtung 4 eine entsprechende Stellgröße an den Aktor 5 ausgibt.

Der Massenstrom des Trägermediums wird entweder von anderen Funktionen oder sogar anderen Regelungen vorgegeben. Dies kann entweder in Abhängigkeit der aktuell geforderten oder gestellten Leistung über eine definierbare (und in der Regel konstante) Kennlinie ermittelt werden, wobei die Stelleinrichtung entsprechend angesteuert wird oder bei einer freigegebenen (bzw. aktivierten) Wärme- oder Kältequelle wird der Massenstrom maximal und nichtmodulierend vorgegeben.

Der Massenstrom des Trägermediums durch den Energieerzeuger 1 wird in den meisten bekannten Verfahren nicht zum Zwecke des Regelns der Temperatur des Trägermediums variiert. Dies hat zur Folge, dass die Regelgüte bei niedrigen Rücklauftemperaturen gemindert werden kann, obwohl in einigen Anwendungen das Absenken des Massenstroms durch den Erzeuger über entsprechende Stellglieder (z. B. drehzahlvariable Pumpen, Drosselklappen, Mischer, etc.) und eine entsprechende Steigerung der Regelgüte möglich wäre.

Der vorliegenden Erfindung liegt die Aufgabe zugrunde, ein Verfahren, eine Regelvorrichtung und ein System zum Regeln einer Temperatur eines Trägermediums, das einen Energieerzeuger durchströmt, anzugeben, womit eine im Vergleich zum Stand der Technik verbesserte Regelgüte erzielt werden kann. Insbesondere sollen ein Verfahren und eine Regelvorrichtung bereitgestellt werden, womit ein Energieerzeuger mit möglichst hoher Leistung bei möglichst hohem Massenstrom des Trägermediums durch den Energieerzeuger betrieben werden kann.

Gemäß einem ersten Aspekt der Erfindung gelingt die Lösung der Aufgabe durch ein Verfahren zum Regeln einer Temperatur eines fluiden Trägermediums nach Anspruch 1. Gemäß einem zweiten Aspekt der Erfindung gelingt die Lösung der Aufgabe durch ein Verfahren zum Regeln einer Temperatur eines fluiden Trägermediums nach Anspruch 2. Das Trägermedium durchströmt einen Energieerzeuger, wobei der Energieerzeuger das Trägermedium erhitzt oder abkühlt bevor es über einen Vorlauf zu einem Verbraucher und anschließend über einen Rücklauf zurück zum Energieerzeuger strömt. In einem ersten Verfahrensschritt wird zunächst eine Regelabweichung als Differenz zwischen einem Sollwert und einem Istwert der Temperatur des Trägermediums erfasst. Anschließend wird eine erste Stellgröße zum Einstellen einer Leistung des Energieerzeugers ermittelt und die Temperatur des fluiden Trägermediums zum Minimieren der Regelabweichung zwischen Sollwert und Istwert der Temperatur unter Verwendung der ersten Stellgröße geregelt.

Erfindungsgemäß wird in Abhängigkeit einer vorgegebenen minimal stellbaren Leistung und einer vorgegebenen maximal stellbaren Leistung beziehungsweise in Abhängigkeit eines vorgegebenen minimal stellbaren Massenstroms und eines vorgegebenen maximal stellbaren Massenstroms eine zweite Stellgröße zum Einstellen eines Massenstroms des fluiden Trägermediums durch den Energieerzeuger ermittelt, wobei das Regeln der Temperatur unter Verwendung der ersten und der zweiten Stellgröße erfolgt. Dies kann derart geschehen, dass eine höchstmögliche Leistung des Energieerzeugers und ein höchstmöglicher Massenstrom des fluiden Trägermediums durch den Energieerzeuger erreicht werden.

Dadurch, dass nicht nur die Leistung des Energieerzeugers, sondern auch der Massenstrom des fluiden Trägermediums durch den Energieerzeuger eingestellt werden, kann die Temperatur je nach Anforderung nach oben oder nach unten geregelt werden. Somit kann einem Überregeln aktiv entgegengesteuert werden, wodurch die Regelgüte wesentlich verbessert wird. Hiermit kann erreicht werden, dass die Regelabweichung des Istwerts der Temperatur des Trägermediums vom Sollwert in kürzerer Zeit minimiert und über einen langen Zeitraum auf einem besonders kleinen Betrag gehalten wird.

Dieser Vorteil kann sowohl beim Heizen wie auch beim Kühlen erreicht werden. Wird geheizt, so ist mit Leistung des Energieerzeugers eine Heizleistung gemeint, so dass der Energieerzeuger zum Beispiel ein Wärmeerzeuger wie etwa ein Öl-, Gas- oder Feststoffkessel sein kann. Wenn gekühlt wird, so steht die Leistung entsprechend für eine Kühlleistung. In beiden Fällen wird ein Trägermedium geheizt bzw. gekühlt, bei dem es sich um eine Flüssigkeit (z.B. Wasser, das aufgrund seiner hohen spezifischen Wärmekapazität und guten Verfügbarkeit besonders gut geeignet ist, Salz-Wasser-Lösungen, Alkohol-Wasser-Lösungen oder Öle sowie in besonderen Anwendung auch Salzschmelzen oder flüssige Metalle) oder ein Gas oder Gasgemisch (z.B. Luft) handeln kann. Ein Erhöhen des Massenstroms des Trägermediums durch den Energieerzeuger bewirkt im Falle des Heizens ein Verringern der Temperatur und beim Kühlen ein Erhöhen der Temperatur des Trägermediums.

Bei dem erfindungsgemäßen Regelverfahren können also zwei Betriebsparameter (Leistung *Q* und Massenstrom *ṁ*) jeweils erhöht werden, wobei eine gegensätzliche Wirkung auf die Temperatur des Trägermediums erreicht wird. Dies erlaubt es, das Heiz- oder Kühlsystem zu einem Betriebspunkt hinzuregeln, bei dem einerseits die Regelabweichung des Istwerts vom Sollwert der Temperatur des Trägermediums verschwindet und andererseits jeweils höchstmögliche Werte von Leistung und Massenstrom eingestellt werden, so dass insgesamt eine besonders große Wärmemenge transportiert (zu- oder abgeführt, je nachdem ob geheizt oder gekühlt wird) werden kann.

Gemäß einem dritten Aspekt der Erfindung gelingt die Lösung der Aufgabe außerdem durch eine Regelvorrichtung nach Anspruch 10. Gemäß einem vierten Aspekt der Erfindung gelingt die Lösung der Aufgabe durch eine Regelvorrichtung nach Anspruch 11. Gemäß einem fünften Aspekt der Erfindung gelingt die Lösung der Aufgabe ferner durch ein System zum Regeln einer Temperatur eines fluiden Trägermediums nach Anspruch 14., Das Trägermedium durchströmt einen Energieerzeuger, der das Trägermedium erhitzt oder abkühlt, bevor es über einen Vorlauf zu einem Verbraucher und anschließend über einen Rücklauf zurück zum Energieerzeuger strömt, wobei die Regelvorrichtung eine Einheit aufweist, die ausgelegt ist, einen Istwert der Temperatur des Trägermediums mit einem vorgegebenen Sollwert zu vergleichen und eine Regelabweichung zwischen Sollwert und Istwert zu bestimmen.

Das System zum Regeln der Temperatur des fluiden Trägermediums weist einen Sensor auf, der ausgelegt ist, einen Istwerts der Temperatur des Trägermediums zu messen.

Ferner weisen die Regelvorrichtung beziehungsweise das System einen Aktor zum Einstellen einer Leistung des Energieerzeugers und einen Aktor zum Einstellen eines Massenstroms des Trägermediums durch den Energieerzeuger auf. Außerdem weist das System eine Einrichtung auf, die ausgelegt ist einen Sollwert der Temperatur des Trägermediums, eine maximal stellbare Leistung des Energieerzeugers und einen maximal stellbaren Massenstrom des Trägermediums durch den Energieerzeuger vorzugeben.

Außerdem weisen die Regelvorrichtung beziehungsweise das System eine Einheit auf, die ausgelegt ist, den Istwert der Temperatur des Trägermediums mit einem vorgegebenen Sollwert zu vergleichen und eine Regelabweichung zwischen Sollwert und Istwert zu bestimmen.

Ferner umfassen die Regelvorrichtung beziehungsweise das System eine Logik, die ausgelegt ist, eine Stellgröße zum Steuern der Leistung des Energieerzeugers zu ermitteln und an den Aktor zum Einstellen der Leistung des Energieerzeugers auszugeben und eine Stellgröße zum Steuern des Massenstroms des Trägermediums durch den Energieerzeuger zu ermitteln und an den Aktor zum Einstellen des Massenstroms des Trägermediums durch den Energieerzeuger auszugeben. Die Logik ist ausgelegt eine zweite Stellgröße zum Einstellen eines Massenstroms des fluiden Trägermediums durch den Energieerzeuger zu ermitteln und an einen Aktor zum Einstellen des Massenstroms des Trägermediums durch den Energieerzeuger auszugeben, und die Regelvorrichtung ist ausgelegt, die Temperatur unter Verwendung der ersten und der zweiten Stellgröße zu regeln.

Die Logik kann auch dafür ausgelegt sein, die Stellgrößen zum Steuern der Leistung und des Massenstroms derart in Abhängigkeit der Regelabweichung, einer maximal stellbaren Leistung des Energieerzeugers und eines maximal stellbaren Massenstroms des Trägermediums durch den Energieerzeuger zu ermitteln, dass eine höchstmögliche Leistung des Energieerzeugers und ein höchstmöglicher Massenstrom des Trägermediums durch den Energieerzeuger erreicht werden.

Die Regelvorrichtung beziehungsweise das System zum Regeln einer Temperatur sind dazu ausgelegt, ein erfindungsgemäßes Verfahren zum Regeln einer Temperatur auszuführen.

Vorteilhafte Aus- und Weiterbildungen, welche einzeln oder in Kombination miteinander eingesetzt werden können, sind Gegenstand der abhängigen Ansprüche.

Ein geeigneter Ort, um die Temperatur des Trägermediums zu messen, kann zum Beispiel im Vorlauf sein, da eine besonders geringe Entfernung zwischen dem Ort der Temperaturmessung und dem Ort, an dem das Trägermedium erwärmt, bzw. aktiv gekühlt wird, unkontrollierbare Störeinflüsse minimieren kann. In diesem Fall wird die gemessene und geregelte Temperatur des fluiden Trägermediums auch als Vorlauftemperatur oder Erzeugervorlauftemperatur bezeichnet. Die Temperatur des Trägermediums kann aber auch an einer oder mehreren anderen Stelle(n) des Systems gemessen werden. Alternativ hierzu kann auch die Rücklauftemperatur, also die Temperatur des Trägermediums im Rücklauf bestimmt werden und als Eingangsparameter für ein Temperatur-Regelverfahren verwendet werden. Die Temperatur des Trägermediums kann aber auch sowohl im Vorlauf als auch im Rücklauf gemessen werden, so dass eine Temperaturdifferenz zwischen Vor- und Rücklauf bestimmt und/oder geregelt werden kann. Aus dieser Temperaturdifferenz kann zudem der Wärmeübertrag zwischen Trägermedium und dem zu heizenden bzw. kühlenden System (zum Beispiel ein Raum, eine Wohnung, ein Haus, ein Gebäude, usw.) bestimmt werden.

Alternativ kann die Temperatur des Trägermediums auch auf indirekte Weise bestimmt werden. Hierzu könnte beispielsweise die Temperatur eines Gehäuseteils des Energieerzeugers oder eines Behälters oder eines Rohrs, durch das das Trägermedium strömt, gemessen werden. Anstatt eines Sensors, der in direktem Kontakt mit dem Trägermedium oder von dem Trägermedium durchströmten Teil des Systems steht, können zum Beispiel auch optische Messverfahren zum Ermitteln der Temperatur des Trägermediums verwendet werden.

Ein Verbraucher im Sinne der Erfindung wird von dem durch den Energieerzeuger erhitzten oder abgekühlten Trägermedium durchströmt bevor das Trägermedium über einen Rücklauf zum Energieerzeuger zurückströmt. Es kann sich hierbei zum Beispiel um einen Pufferspeicher mit nachgelagerten Heizkörpern handeln. Im einfachsten Fall kann der Verbraucher auch aus Rohrleitungen bestehen, die den Kreislauf zwischen Vorlauf und Rücklauf schließen.

Das erfindungsgemäße Verfahren kann periodisch zu vorgegebenen Zeitpunkten ausgeführt werden. Diese Zeitpunkte können aber müssen nicht in gleichbleibenden Zeitabständen aufeinander folgen. Die Zeitabstände können zum Beispiel entsprechend einer dem zu regelnden System charakteristischen Größenordnung eingestellt werden oder auch deutlich kürzer sein. Da für eine elektronische Regelvorrichtung in der Regel Mikroprozessoren (Taktfrequenz von MHz bis GHz) verwendet werden, können die Zeitabstände sehr kurz (einige Millisekunden bis Nanosekunden) eingestellt werden. Da Heiz- und Kühlprozesse im Vergleich meist wesentlich größere Zeitkonstanten aufweisen (Minuten bis Stunden), können auch sehr komplexe Regelfahren implementiert werden, ohne dass die Regelgüte bzw. Regelgeschwindigkeit dadurch negativ beeinflusst werden würde.

Die erste und die zweite Stellgröße können in Abhängigkeit voneinander ermittelt werden. Hierbei können beispielsweise Restriktionen der jeweiligen Stellgrößen in Abhängigkeit voneinander berücksichtigt werden. Ein voneinander abhängiges Ermitteln der beiden Stellgrößen kann auch dadurch realisiert werden, dass zunächst eine generalisierte Stellgrößenänderung als Hilfsgröße ermittelt wird und in einem weiteren Schritt die generalisierte Stellgrößenänderung auf die beiden Stellgrößen verteilt wird. Das Ermitteln der generalisierten Stellgrößenänderung kann in Abhängigkeit von einem Reglerwert erfolgen. Der Reglerwert kann beispielsweise der Proportional-Anteil (P) oder der Integral-Anteil (I) eines PI-Reglers sein, beziehungsweise eine davon abgeleitete Größe.

Das erfindungsgemässe Verfahren weist einen zusätzlichen Schritt auf, bei dem eine minimal stellbare Leistung des Energieerzeugers vorgegeben wird. Somit kann der Energieerzeuger immer mit einer Mindestleistung betrieben werden. Außerdem wird ein minimal stellbarer Massenstrom des Trägermediums durch den Energieerzeuger vorgegeben. Hiermit kann zum Beispiel ein zu großes Erhitzen des Energieerzeugers verhindert werden.

Vorzugsweise werden die ermittelten Stellgrößen zum Steuern der Leistung und des Massenstroms mit den Minimalwerten der Leistung und des Massenstroms verglichen und falls die betreffende Stellgröße zum Steuern der Leistung und/oder des Massenstroms kleiner als oder gleich groß wie der Minimalwert ist, werden die jeweiligen Minimalwerte ausgegeben.

Vorzugsweise weist das Verfahren einen Schritt des Erfassens von Stellgrößen zum Steuern der Leistung des Energieerzeugers und des Massenstroms des Trägermediums durch den Energieerzeuger eines zurückliegenden (vorbestimmten) Zeitpunkts auf. Diese Stellgrößen können beispielsweise in einem Speicher abgelegt worden sein, so dass die Regelvorrichtung, die das Verfahren ausführt, jederzeit auf Werte von zurückliegenden Zeitpunkten zugreifen kann. Bei dem zurückliegenden Zeitpunkt kann es sich um den vorigen Zeitpunkt handeln, als jener der eine Periode vor dem aktuellen Zeitpunkt liegt, oder auch um einen Zeitpunkt, der mehr als eine Periode zurückliegt.

Ferner kann das Verfahren einen Schritt des Ermittelns von Stellgrößenänderungen für den aktuellen Zeitpunkt zum Steuern der Leistung des Energieerzeugers und des Massenstroms des Trägermediums durch den Energieerzeuger in Abhängigkeit der erfassten Stellgrößen eines vorherigen Zeitpunkts und der Regelabweichung vom Istwert zum Sollwert aufweisen.

Falls die Regelabweichung des Istwerts zum Sollwert der Temperatur des Trägermediums größer als Null ist und der Energieerzeuger das Trägermedium heizt oder ist die Regelabweichung kleiner als Null und der Energieerzeuger kühlt das Trägermedium, so wird zum Minimeren der Regelabweichung entweder die Leistung des Energieerzeugers erhöht, sofern die Leistung kleiner als die maximale stellbare Leistung ist oder der Massenstrom des Trägermediums durch den Energieerzeuger wird reduziert, sofern die Leistung schon der maximalen stellbaren Leistung entspricht.

Falls die Regelabweichung vom Istwert zum Sollwert der Temperatur des Trägermediums kleiner als Null ist und der Energieerzeuger das Trägermedium heizt oder ist die Regelabweichung größer als Null und der Energieerzeuger kühlt das Trägermedium, so wird zum Minimeren der Regelabweichung entweder der Massenstrom des Trägermediums durch den Energieerzeuger erhöht, sofern der Massenstrom kleiner als der maximal stellbare Massenstrom ist oder die Leistung durch den Energieerzeuger wird reduziert, sofern der eingestellte Massenstrom schon dem maximal stellbaren Massenstrom entspricht.

Das Verfahren kann einen Schritt des Berechnens einer generalisierten Stellgrößenänderung aus der Regelabweichung des Istwerts zum Sollwert der Temperatur aufweisen. Aus dieser generalisierten Stellgrößenänderung können dann die Stellgrößenänderungen zum Steuern der Leistung des Energieerzeugers und des Massenstroms durch den Energieerzeuger berechnet werden.

Das Verfahren kann insbesondere einen Schritt aufweisen, bei dem in Abhängigkeit der erfassten Stellgrößen eines vorherigen diskreten Zeitpunkts entschieden wird, wie die berechnete generalisierte Stellgrößenänderung im aktuellen Schritt auf die Stellgrößen Leistung und Massenstrom verteilt werden.

Vorzugsweise kann das Verfahren auch einen Schritt aufweisen, bei dem, falls die Leistung des Energieerzeugers kleiner als die maximal stellbare Leistung und der Massenstrom des Trägermediums durch den Energieerzeuger kleiner als der maximal stellbare Massenstrom und der Betrag der Regelabweichung gleich Null ist oder kleiner als ein Grenzwert ist, ein Korrekturwert ermittelt wird. Der Grenzwert dient dazu, um die Regelabweichung "nahe Null" über eine normierte Kennlinie (unscharf) zu bewerten. Der Korrekturwert kann anschließend auf die Stellgrößen des aktuellen Zeitpunkts zum Steuern der Leistung des Energieerzeugers und des Massenstroms des Trägermediums durch den Energieerzeuger verteilt werden. Hiermit wird verhindert, dass die Regelung das System auf einem Betriebspunkt stabilisiert, bei dem zwar die Regelabweichung verschwindet, aber weder Leistung noch Massenstrom maximal sind.

Der Korrekturwert kann auch zu der generalisierten Stellgrößenänderung hinzuaddiert werden, so dass künstlich eine Abweichung generiert wird. Dann wird die generalisierte Stellgrößenänderung auf die aktuellen Stellgrößen verteilt. Hierdurch kann erreicht werden, dass das zu regelnde System auf einen Betriebspunkt hingetrieben wird, der sich dadurch auszeichnet, dass das System mit maximaler Leistung und/oder maximalem Massenstrom betrieben wird. Ohne diesen Korrekturmechanismus könnte ein Fall eintreten, dass die Regelung das System lediglich zu einem Betriebspunkt treibt, in dem zwar die Regelabweichung verschwindet, aber weder die Leistung des Energieerzeugers noch der Massenstrom des Trägermediums durch den Energieerzeuger maximal sind.

Die Regelvorrichtung weist vorzugsweise eine Einheit auf, die ausgelegt ist, aus der Regelabweichung eine generalisierte Stellgrößenänderung zu berechnen und an die Logik auszugeben. Die Logik kann dann ausgelegt sein, die generalisierte Stellgrößenänderung in Abhängigkeit weiterer Eingangsparameter, wie zum Beispiel Stellgrößen eines zurückliegenden Zeitpunkts, auf die Stellgrößen zum Steuern der Leistung und des Massenstroms zu verteilen.

Eine bevorzugte Regelvorrichtung weist ferner eine Korrektureinheit auf, die ausgelegt ist, einen Korrekturwert zu erzeugen, falls der Betrag der Regelabweichung der Temperatur gleich Null oder kleiner als ein Grenzwert ist und den Korrekturwert an die Logik auszugeben. Der Korrekturwert kann dann zu der generalisierten Stellgrößenänderung hinzuaddiert werden, so dass künstlich eine Abweichung generiert wird. Die Logik verteilt dann die generalisierte Stellgrößenänderung auf die aktuellen Stellgrößen. Hierdurch kann erreicht werden, dass das zu regelnde System auf einen Betriebspunkt hingetrieben wird, der sich dadurch auszeichnet, dass das System mit maximaler Leistung und/oder maximalem Massenstrom betrieben wird. Ohne diesen Korrekturmechanismus könnte ein Fall eintreten, dass die Regelung das System lediglich zu einem Betriebspunkt treibt, in dem zwar die Regelabweichung verschwindet, aber weder die Leistung des Energieerzeugers noch der Massenstrom des Trägermediums durch den Energieerzeuger maximal sind.

### Kurzbeschreibung der Figuren

Weitere vorteilhafte Ausgestaltungen werden nachfolgend anhand eines in den Zeichnungen dargestellten Ausführungsbeispiels, auf welches die Erfindung jedoch nicht beschränkt ist, näher beschrieben.

Es zeigen schematisch:
Figur 1 eine Darstellung eines konventionellen Systems zum Regeln einer Temperatur, durch Ansteuern eines Brenners über eine Regelungseinrichtung gemäß dem Stand der Technik.
Figur 2 eine Darstellung eines Systems zum Regeln einer Temperatur durch Ansteuern eines Brenners und einer Umwälzpumpe über eine Regelvorrichtung gemäß einem Ausführungsbeispiel der vorliegenden Erfindung.
Figur 3 eine Regelvorrichtung zum Regeln einer Temperatur gemäß einem Ausführungsbeispiel der vorliegenden Erfindung.
Figur 4 ein Flussidagram, welches ein Verfahren zum Regeln einer Temperatur gemäß einem Ausführungsbeispiel der vorliegenden Erfindung illustriert.
Figur 5 ein erstes und zweites Ausführungsbeispiel zum Veranschaulichen der vorliegenden Erfindung.
Figur 6 verschiedene zeitliche Verläufe eines Betriebspunkts beim Ausführen des Verfahrens gemäß einem Ausführungsbeispiel der vorliegenden Erfindung ausgehend von unterschiedlichen Startpunkten.
Figur 7 ein exemplarisches Ausführungsbeispiel eines erfindungsgemäßen Systems zum Regeln einer Temperatur mit einer erfindungsgemäßen Regelvorrichtung.
Figur 8 eine exemplarische Realisierung eines Korrekturmechanismus.
Figur 9 zeigt beispielhafte Simulationsergebnisse von Verfahren zum Regeln einer Temperatur, wobei der Massenstrom des Trägermediums konstant ist (alt) beziehungsweise gemäß der Erfindung geregelt wird (neu).
Figur 10 zeigt einen Vergleich der Simulationsergebnisse (alt) und (neu) aus Figur 8, wobei hier die Istwerte der Temperatur zusammen mit der Rücklauftemperatur aufgetragen sind.

### Ausführliche Beschreibung der Erfindung anhand eines Ausführungsbeispiels

Bei dem erfindungsgemäßen Verfahren werden zum Regeln der Temperatur eines fluiden (also flüssigen oder gasförmigen) Trägermediums, das durch einen Energieerzeuger strömt und von diesem erhitzt oder abgekühlt wird, nicht nur die Leistung der Wärme- oder Kältequelle (Energieerzeuger), sondern gleichzeitig und in koordinierter Weise hydraulische Aktoren (wie etwa Pumpen, Drosselklappen oder Mischer) zur Manipulation des Massenstroms (beziehungsweise Volumenstroms) des Trägermediums durch den Energieerzeuger beeinflusst. Der zu stellende Massenstrom des Trägermediums wird ebenso wie die zu stellende Leistung von einem an die Problemstellung angepassten Regler berechnet.

Bei dem im Folgenden beschriebenen Verfahren werden zum Regeln der Temperatur des Trägermediums, das durch den Energieerzeuger strömt, Stellgrößen berechnet, die dazu dienen die beiden (Ausgangs-) Größen Leistung Q des Energieerzeugers und Massenstrom *ṁ* des Trägermediums durch den Energieerzeuger zu steuern. Zur Vereinfachung der Beschreibung werden im Folgenden die Größen *Q* und *ṁ* teilweise selbst auch als Stellgrößen bzw. Δ*Q̇* und Δ*ṁ* als Stellgrößenänderungen bezeichnet. Der Zusammenhang zwischen Stellgröße und der einzustellenden Ausgangsgröße ist üblicherweise durch die jeweilige Kennlinie desjenigen Aktors vorgegeben, der die betreffende Stellgröße im geregelten System umsetzt.

Das erfindungsgemäße Verfahren nutzt somit ein koordiniertes Ansteuerungsverfahren für zwei Stellgrößen, um eine Regelgröße (die Temperatur des Trägermediums) zu regeln. Eine schematische Ansicht eines ersten Ausführungsbeispiels der Erfindung ist in Figur 2 dargestellt. Hierbei handelt es sich um ein Heizungssystem, das als Energieerzeuger 1 einen Wärmeerzeuger 1 umfasst. Das in Figur 2 gezeigte System unterscheidet sich von dem konventionellen System der Figur 1 darin, dass neben der Brennerleistung *Q* des Energieerzeugers 1 auch der durch die Pumpe 7 erzeugte Massenstrom *ṁ* des Trägermediums durch den Energieerzeuger 1 geregelt wird. Hierzu kann zum Beispiel die Drehzahl der Pumpe 7 regulierbar sein oder es kann ein stellbares Drosselventil im Kreislauf, zum Beispiel im Rücklauf, angeordnet sein.

Bei dem in Figur 2 gezeigten Ausführungsbeispiel wird der Istwert *ϑ_{X}* der Temperatur des Trägermediums durch einen Temperatursensor 6 im Vorlauf 2 gemessen. Die zu regelnde Temperatur wird daher auch als Erzeugervorlauftemperatur oder einfach Vorlauftemperatur bezeichnet. Durch den Vorlauf 2 fließt das Trägermedium zu einem (nicht dargestellten) Verbraucher. Vom Verbraucher strömt es über den Rücklauf 3 zurück zum Energieerzeuger 1. Es handelt sich also um einen geschlossenen Kreislauf.

Neben der Regelabweichung vom Istwert *ϑ_{X}* der Temperatur zum Sollwert *ϑ_{W}* und den für die Regelung erforderlichen Parametern (die zum Beispiel die Regelgeschwindigkeit einstellen), werden der Regelvorrichtung 4 auch (dynamische) Restriktionen bezüglich der Stellgrößen vorgegeben. Diese Restriktionen umfassen eine maximale Erzeugerleistung *Q̇ₘₐₓ*, eine minimale Erzeugerleistung Q̇*ₘᵢₙ*, einen maximalen Massenstrom des Trägermediums *ṁₘₐₓ* durch den Energieerzeuger und/oder einen minimalen Massenstrom des Trägermediums *ṁₘᵢₙ* durch den Energieerzeuger. Dynamisch heißt hier, dass diese Restriktionen gegebenenfalls entsprechend einem Betriebszustand oder einer Benutzerauswahl (zeitlich) angepasst werden können.

Sowohl die Restriktionen, wie auch die Sollwertvorgaben oder andere Eingangsparameter können der Regelvorrichtung auch durch eine überlagerte Systemfunktion beziehungsweise durch eine überlagerte Regelungseinrichtung 12 statisch oder dynamisch vorgegeben werden. Die Restriktionen können somit auch zeitlich veränderbar sein.

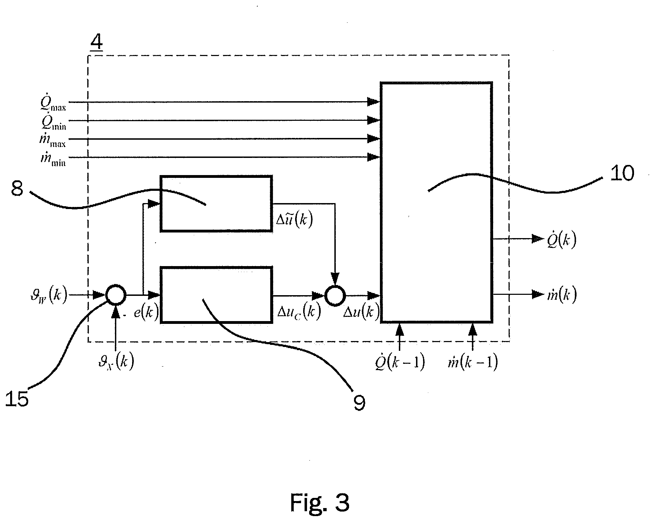

Eine schematische Darstellung einer beispielhaften Ausführung einer Regelvorrichtung 4, die ein erfindungsgemäßes Verfahren ausführt, illustriert Figur 3. Die Regelvorrichtung 4 umfasst hier einen zeitdiskreten Regler 9. Zeitdiskret heißt hier, dass das Verfahren zum Regeln periodisch zu vorgegebenen Zeitpunkten k ausgeführt wird. Bei dem zeitdiskreten Regler 9 kann es sich zum Beispiel um einen digitalen PI-Regler handeln. Eingangsgrößen, wie etwa der gemessene Istwert *ϑ_{X}* der Temperatur, die als analoge Signale anliegen, können über einen (nicht dargestellten) Analog/Digital-Wandler in digitale Signale umgewandelt werden. Entsprechend können digitale Ausgangssignale bei Bedarf durch einen Digital/Analog-Wandler wieder in analoge Signale umgewandelt werden.

Zunächst berechnet eine Einheit 15 zum Berechnen einer Regelabweichung von Sollwert *ϑ_{W}* und Istwert *ϑ_{X}* die Regelabweichung *e*(*k*) aus einem vorgegebenen Sollwert *ϑ_{W}* und dem gemessenen Istwert *ϑ_{X}* der Temperatur des Trägermediums.

Gemäß dem Ausführungbeispiel berechnet der zeitdiskrete Regler 9 in Abhängigkeit der Regelabweichung *e(k)* zwischen Sollwert *ϑ_{W}* und Istwert. *ϑ_{W}* der Temperatur eine im aktuellen Berechnungsschritt *k* erforderliche (und zunächst generalisierte) Stellgrößenänderung Δ*u_{C}*(*k*)*.* Die generalisierte Stellgrößenänderung *Δu_{C}*(*k*) wird auch als Hilfsgröße bezeichnet. Das Ermitteln der generalisierten Stellgrößenänderung *Δu_{C}*(*k*) kann in Abhängigkeit von Reglerwerten erfolgen. Als Reglerwerte können zum Beispiel der Proportional-Anteil P und/oder der Integral-Anteil I des PI-Reglers 9 verwendet werden.

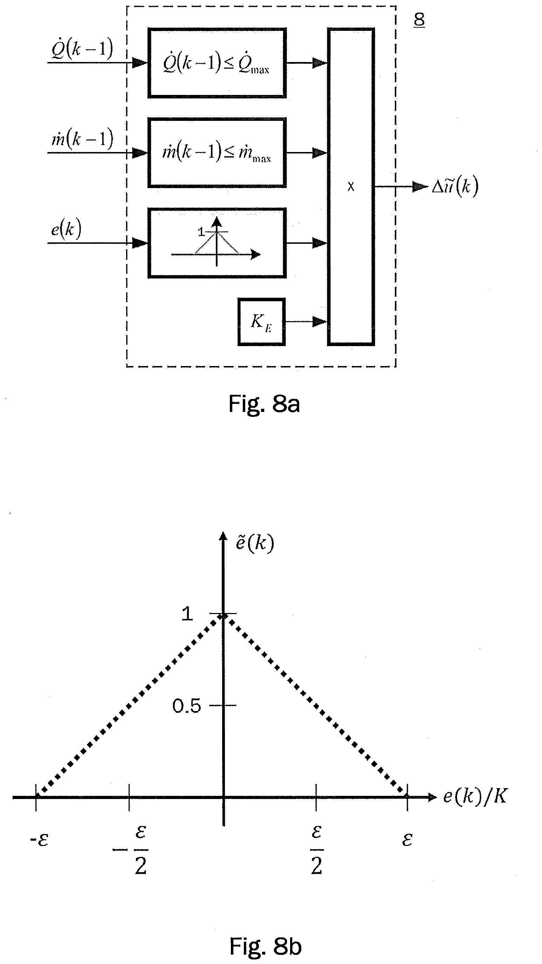

Zudem kann die Regelvorrichtung eine Korrektureinheit 8 aufweisen, der einen Korrekturwert *Δũ*(*k*) berechnet. Ein Ausführungsbeispiel der Korrektureinheit 8 wird weiter unten unter Bezugnahme auf Figur 8 noch genauer beschrieben.

Eine nachgelagerte Logik 10 entscheidet anschließend in Abhängigkeit der im Abtastschritt zuvor (*k* - 1) ermittelten Stellgrößen zum Steuern von Leistung *Q*(*k* - 1) und Massenstrom *ṁ*(*k* - 1) durch den Energieerzeuger 1, wie die geforderte Stellgrößenänderung *Δu_{C}*(*k*) im aktuellen Abtastschritt k auf die Stellgrößen zum Steuern der Leistung *Q̇*(*k*) des Energieerzeugers 1 und zum Steuern des Massenstroms *m*(̇*k*) des Trägermediums durch den Energieerzeuger 1 verteilt werden soll, um die Stellgrößenänderung *Δu_{C}*(*k*) umzusetzen.

Als weitere Eingangsparameter empfängt die Logik 10 die jeweiligen Maximal- und Minimalwerte (Restriktionen) *Q̇*ₘₐₓ, *Q̇ₘᵢₙ*, *ṁₘₐₓ* und *ṁₘᵢₙ.* Die Logik 10 sorgt im Wesentlichen dafür, dass die vorgegebenen Restriktionen eingehalten werden und dass bei positiver Regelabweichung (*e*(*k*) *>* 0) zunächst die Leistung *Q* erhöht wird (bis zur maximal stellbaren Leistung *Q̇ₘₐₓ*) und anschließend der Massenstrom *ṁ* reduziert wird (bis zum minimal möglichen Massenstrom *ṁₘᵢₙ*)*.* Bei negativer Regelabweichung (*e*(*k*) < 0) wird zunächst der Massenstrom m erhöht (bis zum maximal möglichen Massenstrom *ṁₘₐₓ*) und anschließend die Leistung *Q* verringert (bis zur minimal stellbaren Leistung *Q̇ₘᵢₙ*)*.*

Durch diese Regelstrategie wird erreicht, dass ein Betriebspunkt angefahren werden kann, bei dem die Leistung Q des Energieerzeugers sowie der Massenstrom *ṁ* des Trägermediums durch den Energieerzeuger möglichst hoch sind.

Das gewünschte Verhalten des Reglers wird so festgelegt, dass sich die bestmöglichen Randbedingungen für ein effektives Regeln der Vorlauftemperatur im Heizungssystem einstellen. Die Stellgrößen sollen deshalb derart beeinflusst werden, dass zunächst die Regelabweichung der Vorlauftemperatur minimiert wird und weiterhin eine Optimierung der Stellgrößenkombinationen erfolgt.

Grundsätzlich wird das gewünschte Verhalten so definiert, dass der Wärmeerzeuger bei zu geringer Vorlauftemperatur eine darauf angepasste Wärmeleistung, bei maximalem Massenstromdurchfluss, bereitstellt. Befindet sich der Wärmeerzeuger an seiner Leistungsgrenze und kann seine zur Verfügung gestellte Wärmeleistung nicht mehr weiter erhöhen, obwohl der Sollwert der-Vorlauftemperatur noch nicht erreicht ist, so wird der Massenstrom durch den Erzeuger reduziert. Dies kann durch das Verringern der Drehzahl einer modulierenden Pumpe oder durch Verstellen eines Drosselventils erreicht werden.

Die Maximal- und Minimalwerte von Leistung und Massenstrom können zudem dynamisch vorgegeben werden, und somit ebenfalls vom Zeitparameter k abhängig sein.

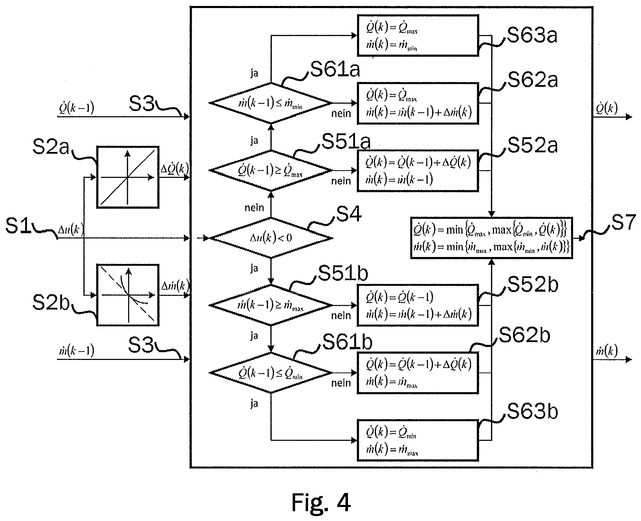

Ein Ausführungsbeispiel des erfindungsgemäßen Verfahrens zum Regeln einer Temperatur wird im Folgenden anhand des in Figur 4 dargestellten schematischen Flussdiagramms illustriert. Das Flussdiagramm illustriert den Entscheidungsprozess der Logik 10, die in Figur 3 (rechter Block) dargestellt ist, zum Bestimmen der an die Aktoren auszugebenen Stellgrößen *Q̇*(*k*) und *ṁ*(*k*)*.*

Als Eingangsparameter wird die zuvor (Schritt S1) berechnete generalisierte Stellgrößenänderung *Δu_{C}*(*k*) eingelesen. Die Logik 10 berechnet in Schritt S2 Stellgrößenänderungen Δ*Q̇*(*k*) und Δ*ṁ*(*k*) zum Steuern der Leistung Q und des Massenstroms *ṁ,* um die Stellgrößenänderung *Δu_{C}*(*k*) umzusetzen. Hierbei berücksichtigt die Logik 10 in den Schritten S2a und S2b Kennlinien von Aktoren 5, 7, welche die Stellgrößenänderungen letztendlich im System realisieren.

Zur weiteren Berechnung der Stellgrößen des aktuellen Zeitpunkts *k* werden in Schritt S3 Stellgrößen *Q*(*k* - 1) und *ṁ*(*k* - 1) aus einem vorherigen Zeitpunkt *k* - 1 als Eingangsparameter eingelesen. Stattdessen oder auch zusätzlich dazu könnten auch Stellgrößen aus einem weiter zurück liegenden Abtastschritt, beispielsweise *k - 2, k* - *3* oder allgemein *k* - *i,* als Eingangsgrößen für die Berechnung eingelesen (erfasst) werden, wobei der Parameter *i* eine natürliche Zahl bezeichnet.

In S4 wird bestimmt, ob die eingelesene generalisierte Stellgrößenänderung *Δu_{C}*(*k*) größer oder kleiner als Null ist. In den folgenden Schritten S51 und S61 wird bestimmt, ob sich der Betriebspunkt des Systems zu dem vorherigen Zeitpunkt innerhalb des Arbeitsfensters (also innerhalb der minimalen und maximalen Grenzwerte) befand. Je nachdem, ob eine der Stellgrößen innerhalb des Arbeitsfensters, an dessen Grenzwerten oder außerhalb liegt, werden in den folgenden Schritten S52, S62 und S63 die Stellgrößen an die Grenzwerte angepasst oder um die berechneten Stellgrößenänderungen verändert. Im letzten Schritt S7 werden die Stellgrößen ausgegeben.

Die Logik 10 zielt zusammenfassend darauf ab, einen Betriebspunkt B anzufahren, bei dem der Energieerzeuger 1 mit der höchstmöglichen Leistung *Q* betrieben und ein möglichst hoher Massenstrom *m* des Trägermediums durch den Energieerzeuger 1 gefördert wird. Ist die Regelabweichung e nahe Null und befindet sich das System nicht im angestrebten optimalen Betriebspunkt B, täuscht eine Korrektureinheit 8 eine zur Temperaturregelung nicht erforderliche Stellgrößenänderung *Δũ*(*k*) vor, welche zur generalisierten Stellgrößenänderung *Δu_{C}*(*k*) hinzuaddiert wird. Entsprechend der oben beschrieben Logik wird somit entsprechend der gewünschte Betriebspunkt B angefahren.

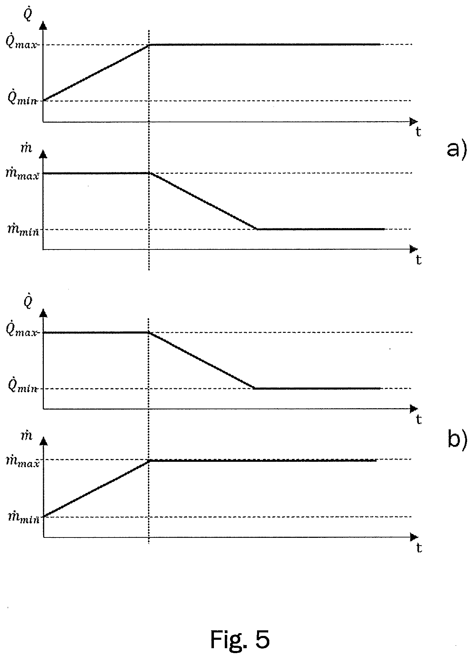

Figur 5a illustriert ein Ausführungsbeispiel eines erfindungsgemäßen Verfahrens für den Fall, dass beim Erhitzen des Trägermediums durch einen Wärmeerzeuger der Istwert *ϑ_{X}* der Temperatur des Trägermediums kleiner als der Sollwert ϑ*_{W}* ist. In anderen Worten ausgedrückt zeigt Figur 5a den Fall, dass das Trägermedium zu kalt ist.

Der Wärmeerzeuger soll hier bei zu geringer Temperatur des Trägermediums eine angepasste Wärmeleistung bei maximalem Massenstrom *ṁₘₐₓ* bereitstellen. Erreicht der Wärmeerzeuger seine Leistungsgrenze *Q̇ₘₐₓ* (bei der senkrechten gepunkteten Linie) und kann folglich seine Wärmeleistung Q nicht mehr weiter erhöhen, so soll der Massenstrom *ṁ* durch den Erzeuger reduziert werden, sofern der Sollwert *ϑ_{W}* der Temperatur noch nicht erreicht ist. Dies kann durch das Verringern der Drehzahl einer modulierenden Pumpe oder einem Drosselventil erreicht werden.

Der entgegengesetzte Fall, also dass das Trägermedium zu heiß ist, wird durch das in Figur 5b gezeigte Ausführungsbeispiel illustriert (für den Fall, dass der Energieerzeuger ein Wärmeerzeuger ist). Hier ist der Istwert *ϑ_{X}* der Temperatur des Trägermediums größer als der Sollwert *ϑ_{W}.*

Wird eine zu hohe Temperatur des Trägermediums ermittelt, so wird hier zuerst der Massenstrom auf seinen Maximalwert *ṁₘₐₓ* angehoben. Bei der senkrechten gestrichelten Linie wird der maximale Massenstrom *ṁₘₐₓ* erreicht. Bleibt der Istwert *ϑ_{X}* der Temperatur des Trägermediums danach noch immer zu hoch, so wird der Wärmeerzeuger anschließend die Wärmeleistung Q soweit reduzieren, dass sich die gewünschte Temperatur (der Sollwert *ϑ_{W}*) einstellt. Figur 5b illustriert wie sich die Wärmeleistung *Q* und der Massenstrom *ṁ* in diesem Beispiel bei zu hoher Vorlauftemperatur zeitlich verhalten.

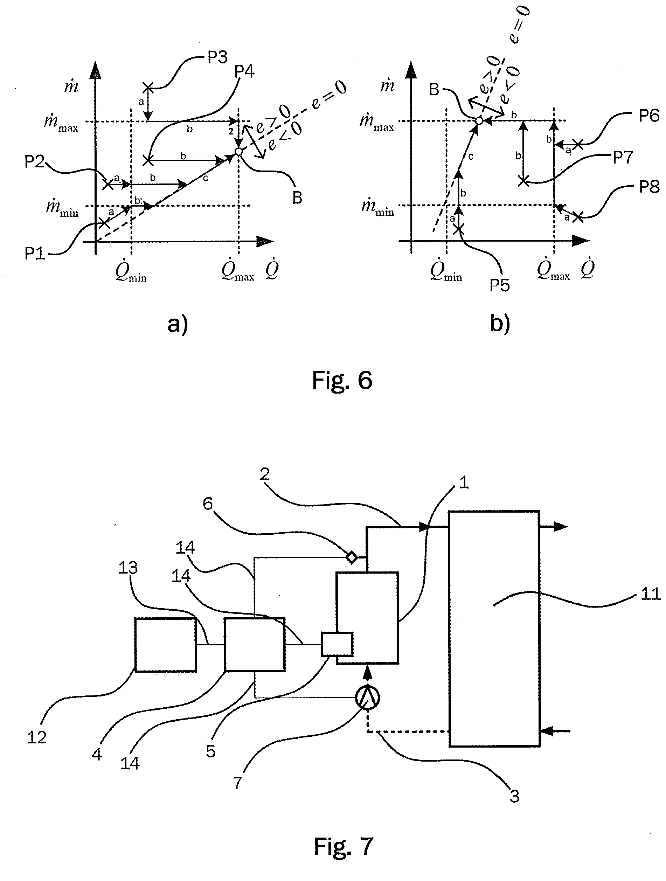

Eine Strategie zum Anfahren des Betriebspunktes B wird im Folgenden anhand der in den Figuren 6a und 6b illustrierten Ausführungsbeispiele näher beschrieben. Die beiden Diagramme illustrieren schematisch wie der Ist-Betriebspunkt X eines Heizungssystems mit einem Energieerzeuger 1 und einer steuerbaren Pumpe 7 durch das erfindungsgemäße Regelungsverfahren zu einem Soll-Betriebspunkt B getrieben wird. Auf der horizontalen Achse der Diagramme ist jeweils die Leistung *Q* aufgetragen, mit der der Energieerzeuger 1 betrieben wird, wobei die oberen und unteren Grenzwerte (Restriktionen) *Q̇ₘᵢₙ* und *Q̇*ₘₐₓ durch vertikale gestrichelte Linien verdeutlicht werden.

Auf der vertikalen Achse ist der Massenstrom *ṁ* des Trägermediums durch den Energieerzeuger 1 aufgetragen, wobei jeweils der minimale und maximale Massenstrom *ṁₘᵢₙ* und *ṁₘₐₓ* durch horizontale gestrichelte Linien verdeutlicht wird. Das durch die gestrichelten Linien der Grenzwerte gebildete Rechteck wird als Arbeitsfenster bezeichnet. Die Restriktionen können dynamisch durch eine überlagerte Regelungseinrichtung 12 vorgegeben werden. Das gezeigte Arbeitsfenster kann sich also zeitlich verändern, wenn sich die Restriktionen zeitlich ändern.

Befindet sich das System in einem Punkt, der auf einer der jeweils breiter gestrichelten diagonalen-Geraden liegt, so verschwindet die Regelabweichung (*e* = 0) des Istwerts *ϑ_{X}* der Temperatur zum Sollwert *ϑ_{W}*. Es existiert also eine Vielzahl von Kombinationen der beiden Stellgrößen, bei denen die Regelabweichung verschwindet. Die dargestellten Geraden gehen hier von einem gedachten Fall aus, bei dem jeweils ein linearer Zusammenhang zwischen Temperatur und Leistung Q bzw. Massenstrom *ṁ* besteht. Die Gerade (*e* = 0) schneidet das Arbeitsfenster so, dass mindestens eine der beiden Stellgrößen Leistung Q oder Massenstrom *ṁ* maximal werden kann.

An dieser Stelle wird der Begriff "Soll-Betriebspunkt" B eingeführt. Dieser befindet sich dort, wo die Gerade (*e* = 0) einen Schnittpunkt mit wenigstens einem der oberen Grenzwerte des Arbeitsfensters bildet. Am Soll-Betriebspunkt B ist also zum einen keine Regelabweichung vorhanden und zum anderen ist mindestens eine der beiden Stellgrößen maximal, so dass dem System eine größtmögliche Wärmemenge zugeführt werden kann. In einem dynamischen Prozess wie dem Regeln der Vorlauftemperatur können sich z.B. Rücklauftemperatur oder Sollwert *ϑ_{W}* der Vorlauftemperatur des Trägermediums permanent ändern. Auf Figur 5 übertragen bedeutet dies, dass sich die Steigung der Geraden verändert und somit der Soll-Betriebspunkt stetig neue Positionen annimmt.

Das Diagramm der Figur 6a illustriert vier Fälle (P1, P2, P3, P4), in denen sich das System anfangs in einem Betriebspunkt mit positiver Regelabweichung (*e* > 0) zwischen Sollwert *ϑ_{W}* und Istwert *ϑ_{X}* der Temperatur befindet. In den Fällen P1 bis P3 liegt der anfängliche Ist-Betriebspunkt (Ausgangslage X) jeweils außerhalb des Arbeitsfensters. Durch die vorgegebenen Restriktionen der Stellgrößen wird das System zunächst in einem ersten Prozess (a) an die Grenzen des Arbeitsfensters getrieben. Dies geschieht hier je nach Situation entweder nur durch Erhöhen der Leistung bis *Q̇ₘᵢₙ* (P2), Reduzieren des Massenstroms bis *ṁₘₐₓ* (P3) oder durch ein gleichzeitiges Erhöhen von Leistung und Massenstrom bis jeweils Qmin und *ṁₘᵢₙ* (P1).

In einem zweiten Beispielprozess (b) wird die Leistung *Q* in allen vier Fällen so lange erhöht bis entweder die Regelabweichung verschwindet (*e* = 0) wie in den Fällen P1, P2 und P4 oder bis wie in Fall 3 zunächst die maximale Leistung *Q̇*ₘₐₓ erreicht wird. Bei Erreichen der maximalen Leistung *Q̇ₘₐₓ*, wird anschließend der Massenstrom *m* verringert (b) bis die Regelabweichung e verschwindet, wie durch den nach unten zeigenden Pfeil angedeutet. Nun ist der Soll-Betriebspunkt B erreicht. In den Fällen P1, P2, P4 wird die Diagonale (*e* = 0) in einem Punkt erreicht, der nicht dem Soll-Betriebspunkt B entspricht. Um das System zum Soll-Betriebspunkt B zu treiben, erzeugt hier eine Korrektureinheit 8 einen Korrekturwert *Δũ*, so dass das System entlang des diagonalen Pfeils zum Soll-Betriebspunkt B getrieben wird (c).

Das Diagramm der Figur 6b illustriert vier Fälle (P5, P6, P7, P8), in denen sich das System in einem Betriebspunkt mit negativer Regelabweichung (*e* < 0) befindet. In den Fällen P5, P6 und P8 P3 liegt der anfängliche Ist-Betriebspunkt (Ausgangslage X) jeweils außerhalb des Arbeitsfensters. Durch die Vorgaben der Stellgrößen wird das System zunächst in einem ersten Prozess (a) an die Grenzen des Arbeitsfensters getrieben. Dies geschieht hier je nach Situation entweder nur durch erhöhen des Massenstroms bis *ṁₘᵢₙ* (P5), Reduzieren der Leistung bis *Q̇*ₘₐₓ (P6) oder durch ein gleichzeitiges erhöhen des Massenstroms bis *ṁₘᵢₙ* und ein Reduzieren der Leistung bis *Q̇*ₘₐₓ (P8).

Anschließend (b) wird der Massenstrom *ṁ* so lange erhöht bis entweder die Regelabweichung e verschwindet (*e* = 0) wie im Fall P5 oder der maximale Massenstrom *ṁₘₐₓ* erreicht wird (Fälle P6 bis P8). In den Fällen P6 bis P8 wird bei Erreichen des maximalen Massenstroms *ṁₘₐₓ* die Leistung *Q* so lange reduziert bis die Regelabweichung *e* verschwindet, wie jeweils durch den nach links zeigenden Pfeil (b) angedeutet wird. Nun ist der Soll-Betriebspunkt B erreicht. Im Fall P5 wird die Diagonale (*e* = 0) in einem Punkt erreicht, der nicht dem Soll-Betriebspunkt B entspricht. Um das System zum optimalen Betriebspunkt B zu treiben, erzeugt hier die Korrektureinheit einen Korrekturwert *Δũ*, so dass das System entlang des diagonalen Pfeils zum Soll-Betriebspunkt getrieben wird (c). Dieser Vorgang wird auch als Betriebspunktoptimierung bezeichnet.

In einem dynamischen Prozess wie dem Regeln der Vorlauftemperatur können sich zum Beispiel die Rücklauftemperatur, also die Temperatur mit der das Trägermedium in den Energieerzeuger 1 einströmt, und/oder der Sollwert der Vorlauftemperatur jederzeit ändern. Auf Figur 6 übertragen bedeutet dies, dass sich die Steigung der gestrichelten Geraden (e = 0) verändert und sich somit auch die Lage des Soll-Betriebspunkts B ändert. Beispielweise kann durch sich ändernde Vorgaben ein Übergang von Figur 6b nach 6a erforderlich sein. Ein Übergang des Soll-Betriebspunkts B der Figur 6b zu jenem der Figur 6a würde im Wesentlichen dem Prozess P6 ohne den Schritt a entsprechen. In umgekehrter Richtung, bei einem Übergang des Soll-Betriebspunkts B von jenem der Figur 6a zu dem der Figur 6b entspräche dem Prozess P3 ohne den Schritt a.

Dem Verfahren zum Regeln der Vorlauftemperatur wird durch das Arbeitsfenster, welches von einer überlagerten Regelungseinrichtung 12 festgelegt werden kann, ein begrenzter Modulationsbereich zugeordnet. Das heißt, befindet sich der Ist-Betriebspunkt außerhalb des Arbeitsfensters, dann soll dieser (auch auf Kosten einer Regelabweichung der Vorlauftemperatur) sofort in das neue Arbeitsfenster verlegt werden. Das Regeln der Vorlauftemperatur erfolgt demnach nachgelagert mit entsprechend geringerer Priorität. Ist der Sollwert der Vorlauftemperatur im Arbeitsfenster erreicht, so soll im nächsten Schritt der Soll-Betriebspunkt angefahren werden.

Ein Heizungssystem mit einer Regelvorrichtung 4 gemäß einem weiteren Ausführungsbeispiel der Erfindung ist auch in Figur 7 dargestellt. Das System umfasst als Energieerzeuger 1 einen Wärmeerzeuger 1 (z. B. einen Gasbrennwertkessel) in Kombination mit einer drehzahlvariablen Kesselkreispumpe 7. Der Wärmeerzeuger 1 erwärmt ein flüssiges Trägermedium, zum Beispiel Wasser. Die Regelvorrichtung 4 ist hier als ein eingebettetes System ausgeführt, welches geeignete Schnittstellen zu einem Temperatursensor 6, einem Prozessregler 5 (Aktor) des Wärmeerzeugers 1 und der drehzahlvariablen Pumpe 7 aufweist. Der Temperatursensor 6 ist im Vorlauf 2 des Wärmeerzeugers 1 angeordnet und misst die Temperatur des Wassers.

Die Schnittstellen können beispielsweise als analoge elektrische Schnittstellen ausgeführt sein, welche Steuersignale in Form von Spannungen zwischen 0 und 10 Volt ausgeben. In dem eingebetteten System wird das erfindungsgemäße Regelungsverfahren von einem Mikrocontroller (bzw. Mikroprozessor) ausgeführt. Insbesondere wird das Verfahren periodisch zu vorgegebenen Zeitpunkten *k* ausgeführt. Dies kann zum Beispiel durch ein Scheduling bzw. Taskmanagement eines Betriebssystems gesteuert werden.

Dem Prozessregler 5 des Wärmeerzeugers 1 (z. B. ein Feuerungsautomat) wird von der Regelvorrichtung 4 zur Temperaturregelung ein Steuersignal (z. B. ein analoges Signal in Form einer Spannung zwischen 0 und 10 V) übergeben, um eine Heizleistung *Q* des Wärmeerzeugers 1 zu steuern. Gleichermaßen wird eine Drehzahl der Pumpe 7 über ein geeignetes (analoges) Steuersignal (z. B. in Form einer Spannung zwischen 0 und 10 V) gesteuert.

Die Regelvorrichtung 4 kann Analog/Digital- und Digital/Analog-Wandler aufweisen, um - je nach Anforderung digitale in analoge Signale zu wandeln und analoge in digitale Signale zu wandeln, insbesondere um beispielweise die oben genannten analogen Spannungssignale aus digitalen Ausgangssignalen der Logik 10 zu erzeugen.

Soll- und Grenzwertvorgaben (zum Beispiel die Restriktionen bezüglich der Leistung *Qₘᵢₙ, Q̇*ₘₐₓ, und bezüglich des Massenstroms des Trägermediums *mₘᵢₙ, ṁₘₐₓ*) können der Regelungseinrichtung 4 zur Temperaturregelung von einer überlagerten Regelungseinrichtung 12 (z. B. einem Gebäudeleitsystem oder einer Systemregelung), über eine geeignete Kommunikationsverbindung 13 (z. B. einem Bussystem) vorgegeben werden.

Aus dem Wärmeerzeuger 1 fließt das vom Brenner erhitzte Trägermedium (Wasser) durch einen Vorlauf 2 in einen Pufferspeicher 11. Der Pufferspeicher 11 kann zum Beispiel ein herkömmlicher Warmwasserspeicher oder einen Trinkwasserspeicher sein, von dem aus Wasserleitungen zu Heizkörpern und anderen Warmwasserverbrauchern führen. Ein Rücklauf 3 schließt den Kreislauf vom Pufferspeicher 11 zum Wärmeerzeuger 1. Im Rücklauf ist eine drehzahlvariable Pumpe 7 angeordnet. Die Pumpe 7 ist über eine Steuerleitung 14 mit der Regelvorrichtung 4 verbunden, so dass die Drehzahl der Pumpe 7 von der Regelvorrichtung 4 gesteuert werden kann.

Eine beispielhafte Ausführung einer Korrektureinheit ist in Figur 8a dargestellt. Die Korrektureinheit führt einen Korrekturmechanismus aus und wird dann aktiviert, wenn die Regelabweichung e nahe Null ist und mindestens eine der beiden Stellgrößen (Leistung Q oder Massenstrom *ṁ*) den jeweiligen maximalen Grenzwert noch nicht erreicht hat. Hiermit kann eine Betriebspunktoptimierung durchgeführt werden. Diese wird zum Beispiel dann aktiviert, wenn sich das durch die überlagerte Regelungseinrichtung 12 vorgegebene Arbeitsfenster ändert. Durch eine zusätzlich erzwungene Stellgrößenänderung *Δũ*(*k*) soll der Ist-Betriebspunkt auf den Soll-Betriebspunkt moduliert werden.

Die zusätzlich erzwungene Stellgrößenänderung *Δũ*(*k*) soll dann aktiv sein, wenn im Ist-Betriebspunkt keine der beiden Stellgrößen (Leistung *Q* oder Massenstrom *ṁ*) maximal ist. Um dies zu überprüfen wird der Ist-Betriebspunkt mit den Grenzwerten von Leistung und Massenstrom (*Q̇ₘᵢₙ*, *Q̇*ₘₐₓ, *ṁₘᵢₙ, ṁ*_{*m*ax}) verglichen. Diese Funktion wird durch die ersten beiden Blöcke (links oben) in Figur 8 dargestellt. Befindet sich der Ist-Betriebspunkt nicht an den Maximalwerten von Leistung und Massenstrom, so geben die ersten beiden Blöcke jeweils eine Eins an den Multiplikator weiter.

Zusätzlich wird kontrolliert, ob eine Regelabweichung *e(k)* vorhanden ist. Hierbei ist eine Kennlinie hinterlegt, welche bei einer Regelabweichung von Null (Istwert gleich Sollwert) den Wert Eins an den Multiplikator weiter gibt. Um die Regelabweichung *e*(*k*) zu bewerten wird Ist der Betrag der Regelabweichung mit einem vorbestimmter Grenzwert *ε* verglichen. Ist sie kleiner als der vorbestimmte Grenzwert *ε*, so wird ein Wert größer als Null und kleiner oder gleich Eins an den Multiplikator weitergegeben. Ist der Betrag der Regelabweichung *e(k)* größer oder gleich dem vorbestimmten Grenzwert *ε*, so wird der Faktor Null an weitergegeben. Die Kennlinie der Korrekturfunktion ist in Figur 8b beispielhaft dargestellt. Die horizontale Achse gibt die Regelabweichung *e*(*k*) an.

Der vorbestimmte Grenzwert *ε* kann anwendungsspezifisch eingestellt oder auch durch eine überlagerte Regelungseinrichtung 12 vorgegeben werden. Der Wert von *ε* kann beispielsweise ein Kelvin betragen.

Das Ergebnis der oben beschriebenen Bewertung ist also ein skalarer Wert *∈̃*(*k*) (auch Aktivierungsgrad genannt), der größer oder gleich 0 und kleiner oder gleich 1 ist. Dieser Aktivierungsgrad *∈̃*(*k*) wird mit den Faktoren der Grenzwerte-Auswertung multipliziert, was die Abschaltung des Korrekturmechanismus bezweckt, wenn mindestens eine der beiden Stellgrößen den maximalen Wert erreicht hat. In Abhängigkeit des Aktivierungsgrades *∈̃*(*k*) wird die (zur eigentlichen Temperaturregelung nicht erforderliche) Stellgrößenänderung Δ*ũ*(*k*) als Korrekturwert generiert.

Außerdem wird der Aktivierungsgrad *∈̃*(*k*) mit einem einstellbaren Regelungsparameter *K_{E}* multipliziert. Dieser Regelungsparameter *K_{E}* ist ein Verstärkungsfaktor, der festlegt wie schnell der Ist-Betriebspunkt zum Soll-Betriebspunkt B geführt werden soll, beziehungsweise wie aggressiv die Korrekturfunktion agieren soll.

Entsprechend einer Logik wie aus dem Ausführungsbeispiel der Figur 4 wird die Summe der erforderlichen Stellgrößenänderung und des Korrekturwerts *Δũ*(*k*) auf die Stellgrößen in Abhängigkeit des aktuellen Betriebspunktes verteilt.

Die Betriebspunktoptimierung wird beispielsweise bei den in der Figur 6 gezeigten Ausführungsbeispielen in den mit c bezeichneten Prozessschritten angewandt. Die Stellgrößenänderung *Δũ*(*k*) bewirkt ein Abweichen des Ist-Betriebspunktes von der Geraden (*e* = 0). Durch dieses Abweichen wird also künstlich und gewollt eine Regelabweichung erzeugt, welche durch das Regelverfahren wieder minimiert wird. Die Stellgrößenänderung *Δũ*(*k*) wird derart ermittelt, dass durch das Regelverhalten des Regelverfahrens der Ist-Betriebspunkt sukzessive zum Soll-Betriebspunkt B geführt wird.

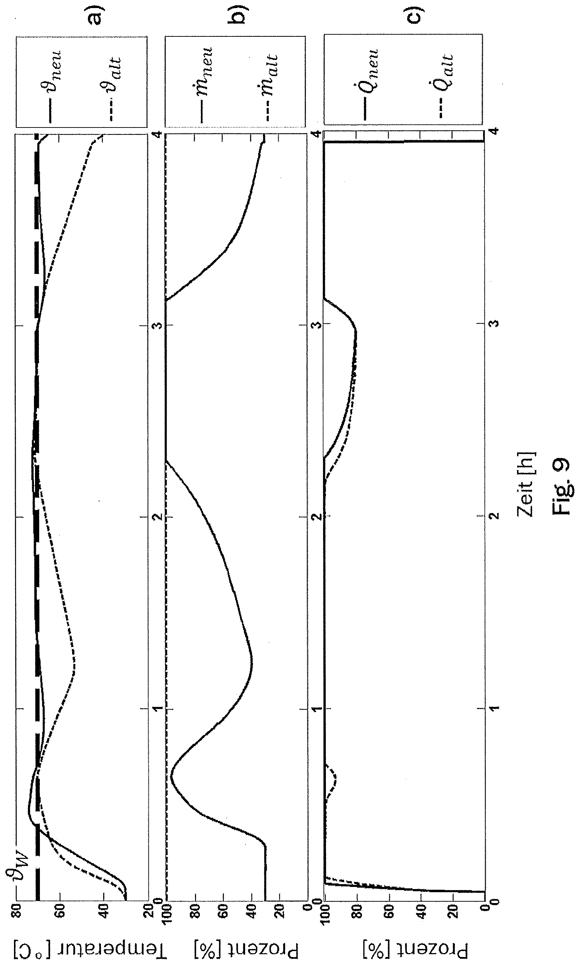

Die prinzipielle Funktionsweise und das grundsätzliche Verhalten des Regelverfahrens werden im Folgenden anhand von beispielhaften Ergebnissen aus Simulationen diskutiert. Figur 9 zeigt einen Vergleich zwischen dem erfindungsgemäßen Verfahren (neu) und einem Regelverfahren ohne Steuerung des Massenstroms (alt) und veranschaulicht somit die gegenüber dem Stand der Technik verbesserte Regelgüte des erfindungsgemäßen Verfahrens.

Figur 9a zeigt einen zeitlichen Verlauf des Istwerts der Temperatur mit (*ϑneu*) und ohne (*ϑₐₗₜ*) Manipulation des Massenstroms des Trägermediums durch den Energieerzeuger. Als Referenz ist der Sollwert *ϑ_{W}* der Temperatur als dick gestrichelte Linie bei 70 °C eingezeichnet. Figur 9b zeigt den zeitlichen Verlauf des Massenstroms. Figur 9c zeigt den zeitlichen Verlauf der Leistung für das Regelverfahren mit (*Q̇ₙₑᵤ,* ununterbrochene Line) und ohne *Q̇ₐₗₜ,* gestrichelte Linie) Modulation des Massenstroms.

Der in Figur 9b aufgetragene Massenstrom *ṁₐₗₜ* (gestrichelte Linie) ist konstant bei 100% über den gesamten zeitlichen Verlauf, der sich über vier Stunden erstreckt. Der zeitliche Verlauf von *ṁₙₑᵤ* variiert zwischen dem Minimalwert *ṁₘᵢₙ* von 30% und dem Maximalwert *ṁₘₐₓ* von 100% (ununterbrochene Linie).

Vergleicht man die beiden in Figur 9a aufgetragenen Kurven des Istwerts der Temperatur *ϑₙₑᵤ* und *ϑₐₗₜ*, so erkennt man zwischen dem zeitlichen Verlauf des Istwerts *ϑₙₑᵤ* und dem Sollwert *ϑ_{W}* bei Regeln mit Modulation des Massenstroms eine deutlich kleine Abweichung als bei dem zeitlichen Verlauf des Istwerts *ϑₐₗₜ* und dem Sollwert *ϑ_{W}* ohne Modulation des Massenstroms. In anderen Worten, die Fläche zwischen der ununterbrochene Kurve *ϑₙₑᵤ* und der Geraden *ϑ_{W}* ist deutlich kleiner als die Fläche zwischen der gestrichelten Kurve *ϑₐₗₜ* und der Geraden *ϑ_{W}*.

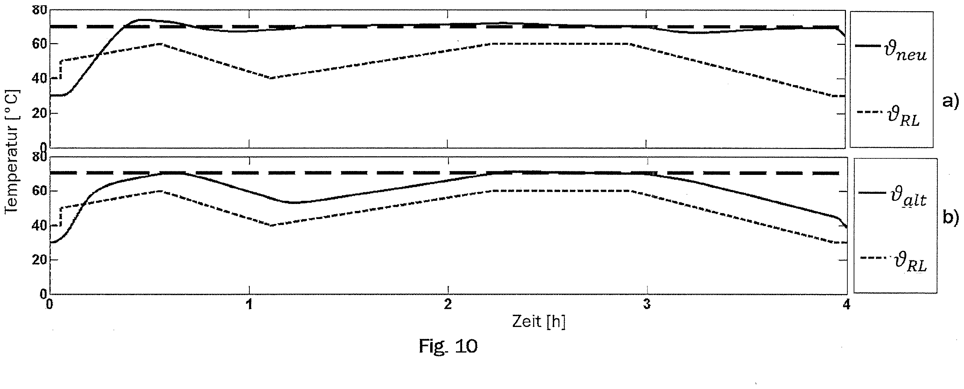

Figur 10 zeigt den Verlauf der in Figur 9 gezeigten Istwerte *ϑₙₑᵤ*, und *ϑₐₗₜ* noch einmal im Vergleich zur Rücklauftemperatur *ϑ_{RL}* und zum Sollwert *ϑ_{W}*. Bei der Simulation wurde ein identischer Verlauf der Rücklauftemperatur *ϑ_{RL}* vorgegeben, um das Regelverhalten zu vergleichen. Unter Verwendung des alten Verfahrens ohne Manipulation des Massenstroms kann der Sollwert *ϑ_{W}* der Temperatur in dem gezeigten Ausführungsbeispiel nur selten erreicht werden. Wie Figur 10b zeigt, reicht die Leistung *Q̇ₐₗₜ* bei niedrigen Rücklauftemperaturen *ϑ_{RL}* (im Zeitraum von Stunde 3 bis 4) nicht aus, um den Istwert *ϑₐₗₜ* der Temperatur des Wärmeträgermediums am Sollwert *ϑ_{W}* zu halten. Daher fällt der Istwert *ϑₐₗₜ* in Figur 10b nach Stunde 3 deutlich unter den Sollwert *ϑ_{W}* ab.

In Figur 10a fällt die Rücklauftemperatur *ϑ_{RL}* ebenfalls deutlich ab. Allerdings kann der Energieerzeuger hier den Istwert *ϑₙₑᵤ* deutlich besser am Sollwert *ϑ_{W}* halten, da unter Verwendung des erfindungsgemäßen Verfahrens der Massenstrom *ṁₙₑᵤ* wie in Figur 9b gezeigt entsprechend abgesenkt wird, so dass bei gleicher Wärmeleistung (siehe Figur 9c, Energieerzeuger wird in beiden Fällen fast immer mit voller Leistung betrieben) die Sollwertvorgabe eingehalten werden kann. Bei geringerem Massenstrom bewirkt dieselbe Wärmeleistung nämlich einen entsprechend höheren Anstieg der Temperatur. Die zusätzliche Manipulation des Massenstroms *ṁₙₑᵤ* des Trägermediums führt somit zu einer deutlichen Verbesserung der Regelgüte im Vergleich zum herkömmlichen Verfahren.

### Bezugszeichenliste

- 1: Energieerzeuger (Wärmeerzeuger)
- 2: Vorlauf
- 3: Rücklauf
- 4: Regelvorrichtung
- 5: Aktor zum Steuern der Leistung des Energieerzeugers
- 6: Temperatursensor
- 7: Aktor (Pumpe) zum Steuern des Massenstroms durch den Energieerzeuger
- 8: Korrektureinheit
- 9: Einheit zum Berechnen der Stellgrößenänderung
- 10: Logik zur Verteilung der Stellgrößenänderung auf Leistung und Massenstrom
- 11: Wärmesenke (Pufferspeicher)
- 12: Überlagerte Regelungseinrichtung
- 13: Verbindung zur Regelungsvorrichtung (Bus)
- 14: Verbindung von Sensor und Aktoren zur Regelungsvorrichtung
- 15: Einheit zum Berechnen der Regelabweichung

## Patentansprüche

1. Verfahren zum Regeln einer Temperatur eines fluiden Trägermediums, das einen Energieerzeuger (1) durchströmt, wobei der Energieerzeuger (1) das Trägermedium erhitzt oder abkühlt bevor es über einen Vorlauf (2) zu einem Verbraucher (11) und anschließend über einen Rücklauf (3) zurück zum Energieerzeuger (1) strömt, mit den Schritten:
Erfassen einer Regelabweichung (*e*) zwischen einem Sollwert *ϑ_{W}*) und einem Istwert (*ϑ_{X}*) der Temperatur;
Ermitteln einer ersten Stellgröße zum Einstellen einer Leistung (*Q*) des Energieerzeugers (1);
Regeln der Temperatur des fluiden Trägermediums zum Minimieren der Regelabweichung (*e*) zwischen Sollwert (*ϑ_{W}*) und Istwert (*ϑ_{X}*) der Temperatur unter Verwendung der ersten Stellgröße;
Vorgeben einer minimal stellbaren Leistung (*Q̇ₘᵢₙ*) des Energieerzeugers (1);
Vorgeben einer maximal stellbaren Leistung (*Q̇ₘₐₓ*) des Energieerzeugers (1); und
Ermitteln einer zweiten Stellgröße zum Einstellen eines Massenstroms (*ṁ*) des fluiden Trägermediums durch den Energieerzeuger (1) in Abhängigkeit der minimal stellbaren Leistung (*Q̇ₘᵢₙ*) und der maximal stellbaren Leistung (*Q̇ₘₐₓ*)*,* wobei das Regeln der Temperatur unter Verwendung der ersten und der zweiten Stellgröße erfolgt,
**gekennzeichnet durch die Schritte:**
falls der Istwert (*ϑ_{X}*) kleiner als der Sollwert *ϑ_{W}*) ist und der Energieerzeuger (1) das Trägermedium erhitzt oder der Istwert (*ϑ_{X}*) größer als der Sollwert (*ϑ_{W}*) ist und der Energieerzeuger das Trägermedium abkühlt:
entweder Ermitteln und Ausgeben der ersten Stellgröße zum Einstellen der Leistung (*Q*) des Energieerzeugers (1), um die Leistung zu erhöhen, wenn die Leistung (*Q*) kleiner als die maximale stellbare Leistung (*Q̇ₘₐₓ*) ist; oder
Ermitteln und Ausgeben der zweiten Stellgröße zum Einstellen des Massenstroms (*ṁ*) des Trägermediums durch den Energieerzeuger (1), um den Massenstrom (*ṁ*) zu reduzieren, wenn die Leistung (*Q*) des Energieerzeugers (1) gleich der maximalen stellbaren Leistung (*Q̇ₘₐₓ*) ist.

2. Verfahren zum Regeln einer Temperatur eines fluiden Trägermediums, das einen Energieerzeuger (1) durchströmt, wobei der Energieerzeuger (1) das Trägermedium erhitzt oder abkühlt bevor es über einen Vorlauf (2) zu einem Verbraucher (11) und anschließend über einen Rücklauf (3) zurück zum Energieerzeuger (1) strömt, mit den Schritten:
Erfassen einer Regelabweichung (e) zwischen einem Sollwert *ϑ_{W}*) und einem Istwert (*ϑ_{X}*) der Temperatur;
Ermitteln einer ersten Stellgröße zum Einstellen einer Leistung (*Q*) des Energieerzeugers (1);
Regeln der Temperatur des fluiden Trägermediums zum Minimieren der Regelabweichung (*e*) zwischen Sollwert (*ϑ_{W}*) und Istwert (*ϑ_{W}*) der Temperatur unter Verwendung der ersten Stellgröße;
Vorgeben eines minimal stellbaren Massenstroms (*ṁₘᵢₙ*) des Trägermediums durch den Energieerzeuger (1);
Vorgeben eines maximal stellbaren Massenstroms (*ṁₘₐₓ*) des Trägermediums durch den Energieerzeuger (1); und
Ermitteln einer zweiten Stellgröße zum Einstellen eines Massenstroms (*ṁ*) des fluiden Trägermediums durch den Energieerzeuger (1) in Abhängigkeit des minimal stellbaren Massenstroms (*ṁₘᵢₙ*) und des maximal stellbaren Massenstroms (*ṁₘₐₓ*)*,* wobei das Regeln der Temperatur unter Verwendung der ersten und der zweiten Stellgröße erfolgt,
**gekennzeichnet durch die Schritte:**
falls der Istwert (*ϑ_{X}*) größer als der Sollwert (*ϑ_{W}*) ist und der Energieerzeuger (1) das Trägermedium erhitzt oder falls der Istwert (*ϑ_{X}*) kleiner als der Sollwert (*ϑ_{W}*) ist und der Energieerzeuger (1) das Trägermedium abkühlt:
Ermitteln und Ausgeben der zweiten Stellgröße zum Einstellen des Massenstroms (*ṁ*) des Trägermediums durch den Energieerzeuger (1), um den Massenstrom zu erhöhen wenn der Massenstrom (*ṁ*) kleiner als der maximal stellbare Massenstrom (*ṁₘₐₓ*) ist;
und, wenn der Massenstrom (*ṁ*) des Trägermediums durch den Energieerzeuger (1) gleich dem maximal stellbaren Massenstrom (*ṁₘₐₓ*) ist und falls nach einem vorgegebenen Zeitintervall der Sollwert nicht erreicht wird:
Ermitteln und Ausgeben der ersten Stellgröße zum Einstellen der Leistung (Q) des Energieerzeugers (1), um die Leistung zu reduzieren.

3. Verfahren zum Regeln einer Temperatur eines fluiden Trägermediums nach Anspruch 1 oder 2, **dadurch gekennzeichnet, dass** die erste und die zweite Stellgröße in Abhängigkeit voneinander ermittelt werden.

4. Verfahren zum Regeln einer Temperatur eines fluiden Trägermediums nach Anspruch 1, **gekennzeichnet durch** die Schritte:
Vergleichen der ermittelten Stellgrößen der Leistung und des Massenstroms mit der minimal stellbaren Leistung (*Q̇ₘᵢₙ*) und dem minimal stellbaren Massenstrom (*ṁₘᵢₙ*) und
Ausgeben der Stellgrößen zum Einstellen des jeweiligen Minimalwerts, falls die betreffende Stellgröße zum Einstellen der Leistung und/oder des Massenstroms kleiner als oder gleich groß wie der Minimalwert ist.

5. Verfahren zum Regeln einer Temperatur eines fluiden Trägermediums nach Anspruch 1 oder 4, **gekennzeichnet durch** die Schritte:
Vergleichen der ermittelten Stellgrößen der Leistung und des Massenstroms mit der maximal stellbaren Leistung (*Q̇ₘₐₓ*) und dem maximal stellbaren Massenstrom (*ṁₘₐₓ*) und
Ausgeben der Stellgrößen zum Einstellen des jeweiligen Maximalwerts, falls die betreffende Stellgröße zum Einstellen der Leistung und/oder des Massenstroms größer als oder gleich groß wie der Maximalwert ist.

6. Verfahren zum Regeln einer Temperatur eines fluiden Trägermediums nach mindestens einem der vorhergehende Ansprüche, **dadurch gekennzeichnet, dass**, falls keine Regelabweichung (*e*) vorhanden ist oder der Betrag der Regelabweichung (*e*) einen vorbestimmten Grenzwert unterschreitet und weder die maximal stellbare Leistung (*Q̇ₘₐₓ*) noch der maximal stellbare Massenstrom (*ṁₘₐₓ*) erreicht werden, die folgenden Schritte ausgeführt werden:
Ermitteln und Ausgeben eines Korrekturwerts (Δ*ũ*), und
Verteilen des Korrekturwerts (Δ*ũ*) auf die Stellgrößen zum Einstellen der Leistung (*Q*) des Energieerzeugers (1) und des Massenstroms (*ṁ*) des Trägermediums durch den Energieerzeuger (1).

7. Verfahren zum Regeln einer Temperatur eines fluiden Trägermediums nach mindestens einem der vorhergehenden Ansprüche, wobei die Verfahrensschritte periodisch zu vorgegebenen Zeitpunkten (*k*) ausgeführt werden.

8. Verfahren zum Regeln einer Temperatur eines fluiden Trägermediums nach Anspruch 7, **gekennzeichnet durch** die Schritte:
Erfassen der Stellgrößen zum Einstellen der Leistung (Q̇_{*k*-*i*}) des Energieerzeugers (1) und des Massenstroms (*ṁ*_{*k*-*i*}) des Trägermediums durch den Energieerzeuger (1) eines zurückliegenden Zeitpunkts (*k* - *i*); und
Ermitteln und Ausgeben von Stellgrößenänderungen für den aktuellen Zeitpunkt (*k*) zum Einstellen der Leistung (*Q*) des Energieerzeugers (1) und des Massenstroms (*ṁ*) des Trägermediums durch den Energieerzeuger (1) in Abhängigkeit der erfassten Stellgrößen zum Einstellen der Leistung (Q̇_{*k*-*i*}) und des Massenstroms (ṁ_{*k*-*i*}) des vorherigen Zeitpunkts (*k* - *i*) und der erfassten Regelabweichung (*e*).

9. Verfahren zum Regeln einer Temperatur eines fluiden Trägermediums nach mindestens einem der vorhergehende Ansprüche, **dadurch gekennzeichnet, dass** die erste Stellgröße der Leistung (*Q*) des Energieerzeugers (1) und die zweite Stellgröße des Massenstroms (*ṁ*) des Trägermediums durch den Energieerzeuger (1) in Abhängigkeit einer Hilfsgröße berechnet werden, die von einem Reglerwert abhängt.

10. Regelvorrichtung (4) zum Regeln einer Temperatur eines fluiden Trägermediums, das einen Energieerzeuger (1) durchströmt, wobei der Energieerzeuger (1) das Trägermedium erhitzt oder abkühlt bevor es über einen Vorlauf (2) zu einem Verbraucher (11) und anschließend über einen Rücklauf (3) zurück zum Energieerzeuger (1) strömt, wobei die Regelvorrichtung (4) aufweist:
eine Einheit (15), die ausgelegt ist, einen Istwert (*ϑ_{X}*) der Temperatur des Trägermediums mit einem vorgegebenen Sollwert (*ϑ_{W}*) zu vergleichen und eine Regelabweichung (*e*) zwischen Sollwert (*ϑ_{W}*) und Istwert (*ϑ_{X}*) zu bestimmen; und
eine Logik (10), die ausgelegt ist, eine erste Stellgröße zum Einstellen einer Leistung (*Q*) des Energieerzeugers (1) zu ermitteln und an einen Aktor (5) zum Einstellen der Leistung (*Q*) des Energieerzeugers (1) auszugeben, wobei:
die Regelvorrichtung (4) ausgelegt ist, die Temperatur des fluiden Trägermediums zum Minimieren der Regelabweichung (*e*) zwischen Sollwert (*ϑ_{W}*) und Istwert (*ϑ_{X}*) der Temperatur unter Verwendung der ersten Stellgröße zu regeln,
die Logik (10) ausgelegt ist, eine minimal stellbare Leistung (*Q̇ₘᵢₙ*) des Energieerzeugers (1) und eine maximal stellbare Leistung (*Q̇ₘₐₓ*) des Energieerzeugers (1) vorzugeben,
die Logik (10) ausgelegt ist, in Abhängigkeit der minimal stellbaren Leistung (*Q̇ₘᵢₙ*) und der maximal stellbaren Leistung (*Q̇ₘₐₓ*) eine zweite Stellgröße zum Einstellen eines Massenstroms (*ṁ*) des fluiden Trägermediums durch den Energieerzeuger (1) zu ermitteln und an den Aktor (5) zum Einstellen des Massenstroms (*ṁ*) des Trägermediums durch den Energieerzeuger (1) auszugeben, und
die Regelvorrichtung (4) ausgelegt ist, die Temperatur unter Verwendung der ersten und der zweiten Stellgröße zu regeln,
**dadurch gekennzeichnet, dass** die Logik (10) ferner dazu ausgelegt ist:
falls der Istwert (*ϑ_{X}*) kleiner als der Sollwert (*ϑ_{W}*) ist und der Energieerzeuger (1) das Trägermedium erhitzt oder der Istwert (*ϑ_{X}*) größer als der Sollwert (*ϑ_{W}*) ist und der Energieerzeuger (1) das Trägermedium abkühlt:
entweder die erste Stellgröße zum Einstellen der Leistung (*Q*) des Energieerzeugers (1) zu ermitteln und auszugeben, um die Leistung zu erhöhen, wenn die Leistung (Q) kleiner als die maximale stellbare Leistung (*Q̇ₘₐₓ*) ist; oder
die zweite Stellgröße zum Einstellen des Massenstroms (*ṁ*) des Trägermediums durch den Energieerzeuger (1) zu ermitteln und auszugeben, um den Massenstrom (*ṁ*) zu reduzieren, wenn die Leistung (*Q̇*) des Energieerzeugers (1) gleich der maximalen stellbaren Leistung (*Q̇ₘₐₓ*) ist.

11. Regelvorrichtung (4) zum Regeln einer Temperatur eines fluiden Trägermediums, das einen Energieerzeuger (1) durchströmt, wobei der Energieerzeuger (1) das Trägermedium erhitzt oder abkühlt bevor es über einen Vorlauf (2) zu einem Verbraucher (11) und anschließend über einen Rücklauf (3) zurück zum Energieerzeuger (1) strömt, wobei die Regelvorrichtung (4) aufweist:
eine Einheit (15), die ausgelegt ist, einen Istwert (*ϑ_{X}*) der Temperatur des Trägermediums mit einem vorgegebenen Sollwert (*ϑ_{W}*) zu vergleichen und eine Regelabweichung (*e*) zwischen Sollwert (*ϑ_{W}*) und Istwert (*ϑ_{X}*) zu bestimmen; und
eine Logik (10), die ausgelegt ist, eine erste Stellgröße zum Einstellen einer Leistung (*Q*) des Energieerzeugers (1) zu ermitteln und an einen Aktor (5) zum Einstellen der Leistung (*Q*) des Energieerzeugers (1) auszugeben, wobei:
die Regelvorrichtung (4) ausgelegt ist, die Temperatur des fluiden Trägermediums zum Minimieren der Regelabweichung (*e*) zwischen Sollwert (*ϑ_{W}*) und Istwert (*ϑ_{X}*) der Temperatur unter Verwendung der ersten Stellgröße zu regeln,
die Logik (10) ausgelegt ist einen minimal stellbaren Massenstrom (*ṁₘᵢₙ*) des Trägermediums durch den Energieerzeuger (1) und einen maximal stellbaren Massenstrom (*ṁₘₐₓ*) des Trägermediums durch den Energieerzeuger (1) vorzugeben,
die Logik (10) ausgelegt ist, in Abhängigkeit des minimal stellbaren Massenstroms (*ṁₘᵢₙ*) und des maximal stellbaren Massenstroms (*ṁₘₐₓ*) eine zweite Stellgröße zum Einstellen eines Massenstroms (*ṁ*) des fluiden Trägermediums durch den Energieerzeuger (1) zu ermitteln und an den Aktor (5) zum Einstellen des Massenstroms (*ṁ*) des Trägermediums durch den Energieerzeuger (1) auszugeben, und
die Regelvorrichtung (4) ausgelegt ist, die Temperatur unter Verwendung der ersten und der zweiten Stellgröße zu regeln,
**dadurch gekennzeichnet, dass** die Logik (10) ferner dazu ausgelegt ist:
falls der Istwert (*ϑ_{X}*) größer als der Sollwert (*ϑ_{W}*) ist und der Energieerzeuger (1) das Trägermedium erhitzt oder falls der Istwert (*ϑ_{X}*) kleiner als der Sollwert (*ϑ_{W}*) ist und der Energieerzeuger (1) das Trägermedium abkühlt:
die zweite Stellgröße zum Einstellen des Massenstroms (*ṁ*) des Trägermediums durch den Energieerzeuger (1) zu ermitteln und auszugeben, um den Massenstrom zu erhöhen wenn der Massenstrom (*ṁ*) kleiner als der maximal stellbare Massenstrom (*ṁₘₐₓ*) ist;
und, wenn der Massenstrom (*ṁ*) des Trägermediums durch den Energieerzeuger (1) gleich dem maximal stellbaren Massenstrom (*ṁₘₐₓ*) ist und falls nach einem vorgegebenen Zeitintervall der Sollwert nicht erreicht wird:
die erste Stellgröße zum Einstellen der Leistung (*Q*) des Energieerzeugers (1) zu ermitteln und auszugeben, um die Leistung zu reduzieren.

12. Regelvorrichtung (4) nach Anspruch 10 oder 11, **dadurch gekennzeichnet, dass** die Regelvorrichtung (4) ferner eine Einheit (9) aufweist, die ausgelegt ist, aus der Regelabweichung (*e*) eine generalisierte Stellgrößenänderung (Δ*u_{C}*) zu berechnen und an die Logik (10) auszugeben.

13. Regelvorrichtung (4) nach Anspruch 12, **dadurch gekennzeichnet, dass** die Regelvorrichtung (4) ferner eine Korrektureinheit (8) aufweist, die ausgelegt ist, einen Korrekturwert (Δũ) zu erzeugen, falls der Betrag der Regelabweichung (e) gleich Null oder kleiner als ein Grenzwert (*ε*) ist und den Korrekturwert (Δ*ũ*) an die Logik (10) auszugeben.

14. System zum Regeln einer Temperatur eines fluiden Trägermediums, das einen Energieerzeuger (1) durchströmt, wobei der Energieerzeuger (1) das Trägermedium erhitzt oder abkühlt bevor es über einen Vorlauf (2) zu einem Verbraucher (11) und anschließend über einen Rücklauf (3) zurück zum Energieerzeuger (1) strömt, wobei das System aufweist:
einen Sensor (6), der ausgelegt ist, einen Istwerts (*ϑ_{X}*) der Temperatur des Trägermediums zu messen;
einen ersten Aktor (5) zum Einstellen einer Leistung (*Q̇*) des Energieerzeugers (1); und
einen zweiten Aktor (7) zum Einstellen eines Massenstroms (*ṁ*) des Trägermediums durch den Energieerzeuger (1);
eine Einrichtung (12), die ausgelegt ist:
einen Sollwerts (*ϑ_{W}*) der Temperatur des Trägermediums,
eine maximal stellbare Leistung (*Q̇ₘₐₓ*) des Energieerzeugers (1) und
einen maximal stellbaren Massenstrom (*ṁₘₐₓ*) des Trägermediums durch den Energieerzeuger (1) vorzugeben; und
eine Regelvorrichtung (4) nach Anspruch 10 oder 11..

## Claims

1. A method for controlling a temperature of a fluid carrier medium flowing through an energy generator (1), wherein the energy generator (1) heats or cools the carrier medium before it flows via an feed line (2) to a load (11) and then via a return line (3) back to the energy generator (1), comprising the steps of:
acquiring a control deviation (*e*) between a setpoint value (ϑ_{w}) and an actual value (ϑₓ) of the temperature;
determining a first control variable for setting a power (*Q*) of the energy generator (1),
controlling the temperature of the fluid carrier medium using the first control variable so as to minimize the control deviation (*e*) between the setpoint value (ϑ_{w}) and the actual value (*ϑₓ*) of the temperature;
defining a minimum settable power (*Q̇ₘᵢₙ*) of the energy generator (1);
defining a maximum settable power (*Q̇ₘₐₓ*) of the energy generator (1);
determining a second control variable for setting a mass flow (*ṁ*) of the fluid carrier medium through the energy generator (1) depending on the minimum settable power (*Q̇ₘᵢₙ*) and the maximum settable power (*Q̇ₘₐₓ*)*.* the temperature being controlled using the first and second control variables,
**characterized by the steps:**
if the actual value (ϑₓ) is less than the setpoint value (ϑ_{w}) and the energy generator (1) heats the carrier medium or the actual value (*ϑₓ*) is greater than the setpoint value (ϑ_{w}) and the energy generator cools the carrier medium:
either determining and outputting the first control variable for setting the power (*Q*) of the energy generator (1) in order to increase the power when the power (*Q*) is less than the maximum settable power (*Q̇ₘₐₓ*); or
determining and outputting the second control variable for setting the mass flow (*ṁ*) of the carrier medium through the energy generator (1) in order to reduce the mass flow (*ṁ*) when the power (*Q*) of the energy generator (1) is equal to the maximum settable power (*Q̇ₘₐₓ*).

2. A method for controlling a temperature of a fluid carrier medium flowing through an energy generator (1), wherein the energy generator (1) heats or cools the carrier medium before it flows via an feed line (2) to a load (11) and then via a return line (3) back to the energy generator (1), comprising the steps of:
acquiring a control deviation (*e*) between a setpoint value (ϑ_{w}) and an actual value (*ϑₓ*) of the temperature;
determining a first control variable for setting a power (*Q*) of the energy generator (1),
controlling the temperature of the fluid carrier medium using the first control variable so as to minimize the control deviation (*e*) between the setpoint value (ϑ_{w}) and the actual value (*ϑₓ*) of the temperature;
defining a minimum settable mass flow (*ṁₘᵢₙ*) of the carrier medium through the energy generator (1);
defining a maximum settable mass flow (*ṁₘₐₓ*) of the carrier medium through the energy generator (1);
determining a second control variable for setting a mass flow (*ṁ*) of the fluid carrier medium through the energy generator (1) depending on the minimum settable mass flow (*ṁₘᵢₙ*) and the maximum settable mass flow (*ṁ_{mαx}*), the temperature being controlled using the first and second control variables,
**characterized by the steps:**
if the actual value (*ϑ*ₓ) is greater than the setpoint value (ϑ_{w}) and the energy generator (1) heats the carrier medium or if the actual value (*ϑ*ₓ) is smaller than the setpoint value (ϑ_{w}) and the energy generator (1) cools the carrier medium:
determining and outputting the second control variable for setting the mass flow (*ṁ*) of the carrier medium through the energy generator (1) in order to increase the mass flow when the mass flow (*ṁ*) is smaller than the maximum settable mass flow (*ṁ_{mαx}*);
and, if the mass flow (*ṁ*) of the carrier medium through the energy generator (1) is equal to the maximum settable mass flow (*ṁₘₐₓ*) and if the setpoint value is not reached after a predetermined time interval:
determining and outputting the first control variable for setting the power (*Q*) of the energy generator (1) so as to reduce the power.

3. The method for controlling a temperature of a fluid carrier medium according to claim 1 or 2, **characterized in that** the first and the second control variables are determined in mutual dependency.

4. The method for controlling a temperature of a fluid carrier medium according to claim 1, **characterized by** the steps of:
comparing the determined control variables of the power and the mass flow with the maximum settable power (*Q̇ₘₐₓ*) and the minimum settable mass flow (*ṁₘᵢₙ*), respectively, and
outputting the control variables for setting the respective minimum value if the respective control variable for setting the power and/or the mass flow is less than or equal to the minimum value.

5. The method for controlling a temperature of a fluid carrier medium according to claim 1 or 4, **characterized by** the steps of:
comparing the determined control variables of the power and the mass flow with the maximum settable power (*Q̇ₘₐₓ*) and the maximum settable mass flow (*ṁₘₐₓ*) and
outputting the control variables for setting the respective maximum value if the respective control variable for setting the power and/or the mass flow is greater than or equal to the maximum value.

6. The method for controlling a temperature of a fluid carrier medium according to at least one of the preceding claims, **characterized in that**, if there is no control deviation (e) or the amount of the control deviation (e) is lower than a predetermined limit value and neither the maximum settable power (*Q̇ₘₐₓ*) nor the maximum settable mass flow (*ṁₘₐₓ*) are reached, the following steps are performed:
determining and outputting a correcting value (Δ*ũ*), and
distributing the correcting value (Δ*ũ*) to the control variables for setting the power (*Q*) of the energy generator (1) and the mass flow (*ṁ*) of the carrier medium through the energy generator (1).

7. The method for controlling a temperature of a fluid carrier medium according to at least one of the preceding claims, wherein the method steps are performed periodically at predetermined points in time (*k*).

8. The method for controlling a temperature of a fluid carrier medium according to claim 7, **characterized by** the steps of:
acquiring the control variables for setting the power (Q̇_{*k*-*i*}) of the energy generator (1) and the mass flow (*ṁₖ₋ᵢ*) of the carrier medium through the energy generator (1) of a previous point in time (k-i); and
determining and outputting control variable changes for the current point in time (k) for setting the power (*Q*) of the energy generator (1) and the mass flow (m) of the carrier medium through the energy generator (1) as a function of the acquired control variables for setting the power (Q̇_{*k*-*i*}) and the mass flow (*ṁₖ₋ᵢ*) of the previous point in time (k - i) and the acquired control deviation (*e*).

9. The method for controlling a temperature of a fluid carrier medium according to at least one of the preceding claims, **characterized in that** the first control variable of the power (*Q*) of the energy generator (1) and the second control variable of the mass flow (*ṁ*) of the carrier medium through the energy generator (1) are calculated depending on an auxiliary variable that depends on a controller value.

10. A control device (4) for controlling a temperature of a fluid carrier medium flowing through an energy generator (1), wherein the energy generator (1) heats or cools the carrier medium before it flows via an feed line (2) to a load (11) and then via a return line (3) back to the energy generator (1), said control device (4) comprising:
a unit configured to compare an actual value (*ϑ*ₓ) of the temperature of the carrier medium with a predetermined actual value (*ϑ*ₓ) and to determine a control deviation (*e*) between the setpoint value (ϑ_{w}) and the actual value (*ϑ*ₓ);
logic configured to determine a first control variable for setting a power (*Q*) of the energy generator (1) and to output it to an actuator (5) for setting the power (*Q*) of the energy generator (1), wherein:
said control device (4) is configured to control the temperature of the fluid carrier medium using the first control variable so as to minimize the control deviation (e) between the setpoint value (ϑ*_{W}*) and the actual value (*ϑ*_{X}) of the temperature;
the logic (10) is configured to define a minimum settable power (*Q̇ₘᵢₙ*) of the energy generator (1) and a maximum settable power (*Q̇ₘₐₓ*) of the energy generator (1);
the logic (10) is configured to determine a second control variable for setting a mass flow (m) of the fluid carrier medium through the energy generator (1) depending on the minimum settable power (*Q̇ₘᵢₙ*) and the maximum settable power (*Q̇ₘₐₓ*) and to output it to the actuator (5) for setting the mass flow (m) of the carrier medium through the energy generator (1), and
said control device (4) is configured to control the temperature using the first and second control variables,
**characterized in that** the logic (10) is further configured to if the actual value (*ϑ*ₓ) is less than the setpoint value (ϑ_{w}) and the energy generator (1) heats the carrier medium or the actual value (*ϑ*ₓ) is greater than the setpoint value (ϑ_{w}) and the energy generator cools the carrier medium:
either determine and output the first control variable for setting the power (*Q*) of the energy generator (1) in order to increase the power when the power (*Q*) is less than the maximum settable power (*Q̇ₘₐₓ*); or
determine and output the second control variable for setting the mass flow (*ṁ*) of the carrier medium through the energy generator (1) in order to reduce the mass flow (*ṁ*) when the power (*Q*) of the energy generator (1) is equal to the maximum settable power (*Q̇ₘₐₓ*).

11. A control device (4) for controlling a temperature of a fluid carrier medium flowing through an energy generator (1), wherein the energy generator (1) heats or cools the carrier medium before it flows via an feed line (2) to a load (11) and then via a return line (3) back to the energy generator (1), said control device (4) comprising:
a unit configured to compare an actual value (*ϑ*ₓ) of the temperature of the carrier medium with a predetermined actual value (*ϑ*ₓ) and to determine a control deviation (*e*) between the setpoint value (ϑ_{w}) and the actual value (ϑₓ);
logic configured to determine a first control variable for setting a power (*Q*) of the energy generator (1) and to output it to an actuator (5) for setting the power (*Q*) of the energy generator (1), wherein:
said control device (4) is configured to control the temperature of the fluid carrier medium using the first control variable so as to minimize the control deviation (*e*) between the setpoint value (ϑ_{w}) and the actual value (*ϑ*ₓ) of the temperature;
the logic (10) is configured to define a minimum settable mass flow (*ṁₘᵢₙ*) of the carrier medium through the energy generator (1) and a maximum settable mass flow (*ṁₘₐₓ*) of the carrier medium through the energy generator (1);
the logic (10) is configured to determine a second control variable for setting a mass flow (*ṁ*) of the fluid carrier medium through the energy generator (1) depending on the minimum settable mass flow (*ṁₘᵢₙ*) and the maximum settable mass flow (*ṁₘₐₓ*) and to output it to the actuator (5) for setting the mass flow (*ṁ*) of the carrier medium through the energy generator (1), and
said control device (4) is configured to control the temperature using the first and second control variables,
**characterized in that** the logic (10) is further configured to
if the actual value (*ϑ*ₓ) is greater than the setpoint value (ϑ_{w}) and the energy generator (1) heats the carrier medium or if the actual value (*ϑ*ₓ) is smaller than the setpoint value (ϑ_{w}) and the energy generator (1) cools the carrier medium:
determine and output the second control variable for setting the mass flow (*ṁ*) of the carrier medium through the energy generator (1) in order to increase the mass flow when the mass flow (*ṁ*) is smaller than the maximum settable mass flow (*ṁₘₐₓ*);
and, if the mass flow (*ṁ*) of the carrier medium through the energy generator (1) is equal to the maximum settable mass flow (*ṁₘₐₓ*) and if the setpoint value is not reached after a predetermined time interval:
determine and output the first control variable for setting the power (*Q*) of the energy generator (1) so as to reduce the power.

12. The control device (4) according to claim 10 or 11, **characterized in that** the control device (4) further comprises a unit (9) configured to calculate a generalized control variable change (Δ*u_{C}*) from the control deviation (e) and to output it to the logic (10).

13. The control device (4) according to claim 12, **characterized in that** the control device (4) further comprises a correction unit (8) configured to generate a correcting value (Δ*ũ*) if the amount of the control deviation (e) is equal to zero or less than a limit value (ε) and to output the correcting value (Δ*ũ*) to the logic (10).

14. A system for controlling the temperature of a fluid carrier medium flowing through an energy generator (1), wherein the energy generator (1) heats or cools the carrier medium before it flows via an feed line (2) to a load (11) and then via a return line (3) back to the energy generator (1), said system comprising:
a sensor (6) configured to measure an actual value (ϑ*ₓ*) of the temperature of the carrier medium;
a first actuator (5) for setting a power (Q) of the energy generator (1); and
a second actuator (7) for setting a mass flow (m) of the carrier medium through the energy generator (1);
means (12) being configured to define:
a setpoint value (ϑ_{w}) of the temperature of the carrier medium,
a maximum settable power (*Q̇ₘₐₓ*) of the energy generator (1), and
a maximum settable mass flow (*ṁ_{mαx}*) of the carrier medium through the energy generator (1); and
a control device (4) according to claim 10 or 11.

## Revendications

1. Procédé destiné à réguler une température d'un milieu porteur fluide qui traverse un producteur d'énergie (1), dans lequel le producteur d'énergie (1) chauffe ou refroidit le milieu porteur avant qu'il ne s'écoule via un aller (2) vers un utilisateur (11) et ensuite via un retour (3) de nouveau vers le producteur d'énergie (1), avec les étapes consistant à :
détecter un écart de régulation (e) entre une valeur de consigne (*θ_{w}*) et une valeur réelle (*θₓ*) de la température ;
déterminer une première grandeur de réglage pour régler une puissance (*Q*) du producteur d'énergie (1) ;
réguler la température du milieu porteur fluide pour minimiser l'écart de régulation (*e*) entre la valeur de consigne (*θ_{w}*) et la valeur réelle (*θₓ*) de la température au moyen de la première grandeur de réglage ;
prédéfinir une puissance réglable minimale (Q*ₘᵢₙ*) du producteur d'énergie (1) ;
prédéfinir une puissance réglable maximale (Q*ₘₐₓ*) du producteur d'énergie (1) ; et
déterminer une seconde grandeur de réglage pour régler un débit massique (*m*) du milieu porteur fluide par le producteur d'énergie (1) en fonction de la puissance réglable minimale (Q*ₘᵢₙ*) et de la puissance réglable maximale (*Q̇ₘₐₓ*)*,* dans lequel le réglage de la température se produit au moyen de la première et de la seconde grandeurs de réglage,
**caractérisé par** les étapes consistant à :
dans le cas où la valeur réelle (*θ_{X}*) est inférieure à la valeur de consigne (*θ_{W}*) et le producteur d'énergie (1) chauffe le milieu porteur ou la valeur réelle (*θ_{X}*) est supérieure à la valeur de consigne (*θ_{W}*) et le producteur d'énergie refroidit le milieu porteur :
soit déterminer et transmettre la première grandeur de réglage pour régler la puissance (*Q*) du producteur d'énergie (1) afin d'augmenter la puissance lorsque la puissance (*Q*) est inférieure à la puissance réglable maximale (*Qₘₐₓ*) ;
soit déterminer et transmettre la seconde grandeur de réglage pour régler le débit massique (*m*) du milieu porteur par le producteur d'énergie (1) afin de réduire le débit massique (*m*) lorsque la puissance (*Q*) du producteur d'énergie (1) est égale à la puissance réglable maximale (Q*ₘₐₓ*).

2. Procédé destiné à réguler une température d'un milieu porteur fluide qui traverse un producteur d'énergie (1), dans lequel le producteur d'énergie (1) chauffe ou refroidit le milieu porteur avant qu'il ne s'écoule via un aller (2) vers un utilisateur (11) et ensuite via un retour (3) de nouveau vers le producteur d'énergie (1), avec les étapes consistant à :
détecter un écart de régulation (e) entre une valeur de consigne (*θ_{W}*) et une valeur réelle (*θ_{X}*) de la température ;
déterminer une première grandeur de réglage pour régler une puissance (*Q*) du producteur d'énergie (1) ;
régler la température du milieu porteur fluide pour minimiser l'écart de régulation (e) entre la valeur de consigne (*θ_{W}*) et la valeur réelle (*θ_{X}*) de la température au moyen de la première grandeur de réglage ;
prédéfinir un débit massique réglable minimal (*mₘᵢₙ*) du milieu porteur par le producteur d'énergie (1) ;
prédéfinir un débit massique réglable maximal (*mₘₐₓ*) du milieu porteur par le producteur d'énergie (1) ; et
déterminer une seconde grandeur de réglage pour régler un débit massique (*m*) du milieu porteur fluide par le producteur d'énergie (1) en fonction du débit massique réglable minimal (*mₘᵢₙ*) et du débit massique réglable maximal (*mₘₐₓ*)*,* dans lequel le réglage de la température se produit au moyen de la première et de la seconde grandeurs de réglage,
**caractérisé par** les étapes consistant à :
dans le cas où la valeur réelle (*θ_{X}*) est supérieure à la valeur de consigne (*θ_{W}*) et le producteur d'énergie (1) chauffe le milieu porteur ou dans le cas où la valeur réelle (*θ_{X}*) est inférieure à la valeur de consigne (*θ_{W}*) et le producteur d'énergie (1) refroidit le milieu porteur :
déterminer et transmettre la seconde grandeur de réglage pour régler le débit massique (*m*) du milieu porteur par le producteur d'énergie (1) afin d'augmenter le débit massique lorsque le débit massique (*m*) est inférieur au débit massique réglable maximal (*mₘₐₓ*) *;*
et, lorsque le débit massique (*m*) du milieu porteur par le producteur d'énergie (1) est égal au débit massique réglable maximal (*mₘₐₓ*) et dans le cas où après un intervalle de temps prédéfini la valeur de consigne n'a pas été atteinte :
déterminer et transmettre la première grandeur de réglage pour régler la puissance (Q) du producteur d'énergie (1) afin de réduire la puissance.

3. Procédé destiné à réguler une température d'un milieu porteur fluide selon la revendication 1 ou 2, **caractérisé en ce que** la première et la seconde grandeurs de réglage sont déterminées en fonction l'une de l'autre.

4. Procédé destiné à réguler une température d'un milieu porteur fluide selon la revendication 1, **caractérisé par** les étapes consistant à :
comparer les grandeurs de réglage déterminées de la puissance et du débit massique à la puissance réglable minimale (Q*ₘᵢₙ*) et au débit massique réglable minimal (*mₘᵢₙ*), et
transmettre les grandeurs de réglage pour régler la valeur minimale respective dans le cas où la grandeur de réglage concernée pour régler la puissance et/ou le débit massique est inférieure ou égale à la valeur minimale.

5. Procédé destiné à réguler une température d'un milieu porteur fluide selon la revendication 1 ou 4, **caractérisé par** les étapes consistant à :
comparer les grandeurs de réglage déterminées de la puissance et du débit massique à la puissance réglable maximale (Q*ₘₐₓ*) et au débit massique réglable maximal (*mₘₐₓ*)*,* et
transmettre les grandeurs de réglage pour régler la valeur maximale respective dans le cas où la grandeur de réglage concernée pour régler la puissance et/ou le débit massique est supérieure ou égale à la valeur maximale.

6. Procédé destiné à réguler une température d'un milieu porteur fluide selon au moins l'une des revendications précédentes, **caractérisé en ce que**, dans le cas où n'existe aucun écart de régulation (e) ou le montant de l'écart de régulation (e) reste inférieur à une valeur limite prédéfinie et ni la puissance réglable maximale (Q*ₘₐₓ*) ni le débit massique réglable maximal (*mₘₐₓ*) ne sont atteints, sont exécutées les étapes suivantes consistant à :
déterminer et transmettre une valeur de correction (Δ*ũ*), et
répartir les valeurs de correction (Δ*ũ*) entre les grandeurs de réglage pour régler la puissance (*Q*) du producteur d'énergie (1) et du débit massique (*m*) du milieu porteur par le producteur d'énergie (1).

7. Procédé destiné à réguler une température d'un milieu porteur fluide selon au moins l'une des revendications précédentes, dans lequel les étapes de procédé sont exécutées périodiquement en des instants (*k*) prédéfinis.

8. Procédé destiné à réguler une température d'un milieu porteur fluide selon la revendication 7, **caractérisé par** les étapes consistant à :
détecter les grandeurs de réglage pour régler la puissance (Q̇_{*k*-*i*}) du producteur d'énergie (1) et du débit massique (*ṁₖ₋ᵢ*) du milieu porteur par le producteur d'énergie (1) d'un instant (*k-i*) passé, et
déterminer et transmettre des modifications de grandeurs de réglage pour l'instant (*k*) en cours pour régler la puissance (*Q*) du producteur d'énergie (1) et du débit massique (*m*) du milieu porteur par le producteur d'énergie (1) en fonction des grandeurs de réglage saisies pour régler la puissance (Q̇_{*k*-*i*}) et le débit massique (*ṁₖ₋ᵢ*) de l'instant (*k-i*) précédent et de l'écart de régulation (*e*) saisi.

9. Procédé destiné à réguler une température d'un milieu porteur fluide selon au moins l'une des revendications précédentes, **caractérisé en ce que** la première grandeur de réglage de la puissance (*Q*) du producteur d'énergie (1) et la seconde grandeur de réglage du débit massique (*m*) du milieu porteur par le producteur d'énergie (1) sont calculées en fonction d'une grandeur auxiliaire qui dépend d'une valeur de régulateur.

10. Dispositif de régulation (4) destiné à réguler une température d'un milieu porteur fluide qui traverse un producteur d'énergie (1), dans lequel le producteur d'énergie (1) chauffe ou refroidit le milieu porteur avant qu'il ne s'écoule via un aller (2) vers un utilisateur (11) et ensuite via un retour (3) de nouveau vers le producteur d'énergie (1), dans lequel le dispositif de régulation (4) présente :
une unité (15) qui est conçue pour comparer une valeur réelle (*θ_{X}*) de la température du milieu porteur à une valeur de consigne (*θ_{W}*) prédéfinie et déterminer un écart de régulation (*e*) entre la valeur de consigne (*θ_{W}*) et la valeur réelle (*θ_{X}*) ; et
un système logique (10) qui est conçu pour déterminer une première grandeur de réglage pour régler une puissance (*Q*) du producteur d'énergie (1) et la transmettre à un actionneur (5) pour régler la puissance (*Q*) du producteur d'énergie (1), dans lequel :
le dispositif de régulation (4) est conçu pour régler la température du milieu porteur fluide pour minimiser l'écart de régulation (*e*) entre la valeur de consigne (*θ_{W}*) et la valeur réelle (*θ_{X}*) de la température au moyen de la première grandeur de réglage,
le système logique (10) est conçu pour prédéfinir une puissance réglable minimale (Q*ₘᵢₙ*) du producteur d'énergie (1) et une puissance réglable maximale (Q*ₘₐₓ*) du producteur d'énergie (1),
le système logique (10) est conçu pour, en fonction de la puissance réglable minimale (*Qₘᵢₙ*) et de la puissance réglable maximale (*Q̇ₘₐₓ*)*,* déterminer une seconde grandeur de réglage pour régler un débit massique (*m*) du milieu porteur fluide par le producteur d'énergie (1) et la transmettre à l'actionneur (5) pour régler le débit massique (*m*) du milieu porteur par le producteur d'énergie (1), et
le dispositif de régulation (4) est conçu pour régler la température au moyen de la première et de la seconde grandeurs de réglage,
**caractérisé en ce que** le système logique (10) est en outre conçu pour :
dans le cas où la valeur réelle (*θ_{X}*) est inférieure à la valeur de consigne (*θ_{W}*) et le producteur d'énergie (1) chauffe le milieu porteur ou la valeur réelle (*θ_{X}*) est supérieure à la valeur de consigne (*θ_{W}*) et le producteur d'énergie (1) refroidit le milieu porteur :
soit déterminer et transmettre la première grandeur de réglage pour régler la puissance (*Q*) du producteur d'énergie (1) afin d'augmenter la puissance lorsque la puissance (*Q*) est inférieure à la puissance réglable maximale (*Qₘₐₓ*) ;
soit déterminer et transmettre la seconde grandeur de réglage pour régler le débit massique (*m*) du milieu porteur par le producteur d'énergie (1) afin de réduire le débit massique (*m*) lorsque la puissance (*Q*) du producteur d'énergie (1) est égale à la puissance réglable maximale (*Qₘₐₓ*).

11. Dispositif de régulation (4) destiné à réguler une température d'un milieu porteur fluide qui traverse un producteur d'énergie (1), dans lequel le producteur d'énergie (1) chauffe ou refroidit le milieu porteur avant qu'il ne s'écoule via un aller (2) vers un utilisateur (11) et ensuite via un retour (3) de nouveau vers le producteur d'énergie (1), dans lequel le dispositif de régulation (4) présente :
une unité (15) qui est conçue pour comparer une valeur réelle (*θ_{X}*) de la température du milieu porteur à une valeur de consigne (*θ_{W}*) prédéfinie et déterminer un écart de régulation (*e*) entre la valeur de consigne (*θ_{W}*) et la valeur réelle (*θ_{X}*) ; et
un système logique (10) qui est conçu pour déterminer une première grandeur de réglage pour régler une puissance (*Q*) du producteur d'énergie (1) et la transmettre à un actionneur (5) pour régler la puissance (*Q*) du producteur d'énergie (1), dans lequel :
le dispositif de régulation (4) est conçu pour régler la température du milieu porteur fluide pour minimiser l'écart de régulation (*e*) entre la valeur de consigne (*θ_{W}*) et la valeur réelle (*θ_{X}*) de la température au moyen de la première grandeur de réglage,
le système logique (10) est conçu pour prédéfinir un débit massique réglable minimal (*mₘᵢₙ*) du milieu porteur par le producteur d'énergie (1) et un débit massique réglable maximal (*mₘₐₓ*) du milieu porteur par le producteur d'énergie (1),
le système logique (10) est conçu pour, en fonction du débit massique réglable minimal (*mₘᵢₙ*) et du débit massique réglable maximal (*mₘₐₓ*)*,* déterminer une seconde grandeur de réglage pour régler un débit massique (*m*) du milieu porteur fluide par le producteur d'énergie (1) et la transmettre à l'actionneur (5) pour régler le débit massique (*m*) du milieu porteur par le producteur d'énergie (1), et
le dispositif de régulation (4) est conçu pour régler la température au moyen de la première et de la seconde grandeurs de réglage,
**caractérisé en ce que** le système logique (10) est en outre conçu pour :
dans le cas où la valeur réelle (*θ_{X}*) est supérieure à la valeur de consigne (*θ_{W}*) et le producteur d'énergie (1) chauffe le milieu porteur ou dans le cas où la valeur réelle (*θ_{X}*) est inférieure à la valeur de consigne (*θ_{W}*) et le producteur d'énergie (1) refroidit le milieu porteur :
déterminer et transmettre la seconde grandeur de réglage pour régler le débit massique (*m*) du milieu porteur par le producteur d'énergie (1) afin d'augmenter le débit massique lorsque le débit massique (*m*) est inférieur au débit massique réglable maximal (*mₘₐₓ*) ;
et, lorsque le débit massique (*m*) du milieu porteur par le producteur d'énergie (1) est égal au débit massique réglable maximal (*mₘₐₓ*) et dans le cas où après un intervalle de temps prédéfini la valeur de consigne n'a pas été atteinte :
déterminer et transmettre la première grandeur de réglage pour régler la puissance (*Q*) du producteur d'énergie (1) afin de réduire la puissance.

12. Dispositif de régulation (4) selon la revendication 10 ou 11, **caractérisé en ce que** le dispositif de régulation (4) présente en outre une unité (9) qui est conçue pour calculer à partir de l'écart de régulation (*e*) une modification de grandeurs de réglage (Δ*u_{c}*) généralisée et la transmettre au système logique (10).

13. Dispositif de régulation (4) selon la revendication 12, **caractérisé en ce que** le dispositif de régulation (4) présente en outre une unité de correction (8) qui est conçue pour produire une valeur de correction (Δ*ũ*), dans le cas où le montant de l'écart de régulation (*e*) est inférieur ou égal à une valeur limite (*ε*) et transmettre la valeur de correction (Δ*ũ*) au système logique (10).

14. Système destiné à réguler une température d'un milieu porteur fluide qui traverse un producteur d'énergie (1), dans lequel le producteur d'énergie (1) chauffe ou refroidit le milieu porteur avant qu'il ne s'écoule via un aller (2) vers un utilisateur (11) et ensuite via un retour (3) de nouveau vers le producteur d'énergie (1), dans lequel le système présente :
un capteur (6) qui est conçu pour mesurer une valeur réelle (*θ_{X}*) de la température du milieu porteur ;
un premier actionneur (5) pour régler une puissance (*Q*) du producteur d'énergie (1) ; et
un second actionneur (7) pour régler un débit massique (*m*) du milieu porteur fluide par le producteur d'énergie (1) ;
un équipement (12) qui est conçu pour prédéfinir :
une valeur de consigne (*θ_{W}*) de la température du milieu porteur fluide,
une puissance réglable maximale (Q*ₘₐₓ*) du producteur d'énergie (1), et
un débit massique réglable maximal (*mₘₐₓ*) du milieu porteur par le producteur d'énergie (1) ; et
un dispositif de régulation (4) selon la revendication 10 ou 11.
